# FASCICULE DE BREVET EUROPEEN

(11) **EP 1 885 911 B1**
(45) Date de publication et mention de la délivrance du brevet: **28.03.2012**
(21) Numéro de dépôt: 06794471.0
(22) Date de dépôt: 30.05.2006
(51) Int. Cl.: C23C 18/12, C09D 5/08

(54) **SOL POUR LE REVETEMENT PAR VOIE SOL-GEL D'UNE SURFACE ET PROCEDE DE REVETEMENT PAR VOIE SOL-GEL LE METTANT EN UVRE**
SOL ZUR SOL-GEL-PROZESSBESCHICHTUNG EINER OBERFLÄCHE UND SOL-GEL-PROZESSBESCHICHTUNGSVERFAHREN DAMIT
SOL FOR SOL-GEL PROCESS COATING OF A SURFACE AND COATING METHOD BY SOL-GEL PROCESS USING SAME

(30) Priorité: 31.05.2005 FR 0551417
(43) Date de publication de la demande: 13.02.2008
(73) Titulaire: AIRBUS OPERATIONS, 31060 Toulouse (FR)
(72) Inventeur: LE BLANC, Luc, F-31000 Toulouse (FR); CAMPAZZI, Elisa, F-92100 Boulogne Billancourt (FR); SAVIGNE, Patrick, F-44602 Saint Nazaire (FR)
(74) Mandataire: Ilgart, Jean-Christophe
(86) Numéro de dépôt international: PCT/FR2006/050493
(87) Numéro de publication internationale: WO 2007/003828

(56) Documents cités:
- US-A- 5 182 143
- US-A1- 2003 024 432
- US-B1- 6 605 365

## Description

### DOMAINE TECHNIQUE

L'invention concerne un sol pour le revêtement par voie sol-gel d'une surface, en particulier d'une surface comprenant un métal ou un alliage de métal, de préférence d'une surface constituée par un métal ou un alliage de métal.

L'invention a également trait à un procédé de revêtement par voie sol-gel d'une surface, en particulier d'une surface comprenant un métal ou un alliage de métal qui met en oeuvre ledit sol.

Le domaine technique de l'invention peut être défini de manière générale comme celui du traitement de surfaces par exemple en métal ou en alliage de métal, en particulier du revêtement de surfaces par exemple en métal ou en alliage de métal tels que le titane, l'aluminium et leurs alliages utilisés notamment dans l'industrie aéronautique.

De manière plus précise, l'invention se situe dans le domaine de la préparation de revêtements de surface, dits revêtements de surface sol-gel, sur la surface de substrats par exemple en métaux ou en alliages de métaux, afin de communiquer à cette surface des propriétés de résistance chimique et/ou mécanique, telles que résistance à la corrosion, résistance à l'abrasion ; et/ou pour favoriser l'adhérence sur le substrat, par exemple en métal ou en alliage, d'une couche de revêtement organique telle qu'une couche de primaire, de peinture, mastic, colle, ou résine ; le revêtement sol-gel joue alors un rôle analogue aux traitements de conversion ou promoteurs d'adhérence classiques.

Les traitements de conversion conduisent à une modification structurale (superficielle) du substrat métallique (alliages d'aluminium, de titane et autres métaux) par procédé d'anodisation (opération d'électrolyse, par exemple oxydation anodique chromique, sulfurique ou phosphorique) ou par simple procédé chimique de conversion (par exemple chromatation ou phosphatation).

L'anodisation permet de faire croître une couche d'oxyde (ou d'hydroxyde) très adhérente, aux dépens du métal de base, placée en situation d'anode. Les bains d'acide chromique conduisent notamment, sur alliages d'aluminium, à la formation d'une couche fine (quelques microns), poreuse, offrant une bonne aptitude au collage de revêtements organiques.

Parmi les procédés chimiques de conversion, la chromatation permet de former un dépôt mince très adhérent de chromates métalliques en mettant la surface de la pièce à traiter (typiquement, alliages d'aluminium, de zinc ou aciers) au contact d'une solution acide à base de bichromates et d'activateurs fluorés. Ce traitement améliore la tenue à la corrosion du substrat et est aussi utilisée comme base d'accrochage des peintures.

Du fait qu'ils utilisent des bases ou des acides forts et des matières toxiques telles que les chromates dans des cuves d'immersion, ces procédés de traitement de surface présentent de nombreux inconvénients notamment en ce qui concerne leur influence néfaste sur l'environnement.

En effet, ces procédés nécessitent des quantités importantes d'eau pour rincer les solutions de traitement en excès des pièces traitées ; l'eau de rinçage et les solutions de procédé usées doivent être traitées pour éliminer les métaux dissous avant leur rejet ou leur réutilisation ; l'élimination des métaux produit des déchets toxiques supplémentaires qui sont difficiles à épurer et à rejeter.

L'ensemble de ces traitements, ultérieurs à la mise en oeuvre des procédés, augmentent le coût d'utilisation des procédés chimiques classiques par voie humide.

De même, les pièces traitées en fin de vie, ou lors des phases de réparation, génèrent des déchets toxiques préjudiciables pour les utisateurs.

C'est la raison pour laquelle ont été proposés des procédés mettant en oeuvre la technique de revêtement sol-gel afin de surmonter les inconvénients des procédés chimiques par voie humide mentionnés ci-dessus. De tels procédés sont décrits notamment dans les documents US-A-5,814,137, US-A-5,849,110, US-A-5,789,085, US-A-5, 869, 141, US-A-5, 958, 578, US-A-5,869,140, US-A-5, 939, 197 et US-A-6, 037, 060.

Le document US-B1-6 605 365 notamment, décrit la mise en oeuvre de sols contenant un composé d'alcoxyzirconium tel que le tétra-n-propoxyzirconium (TPOZ) et un organosilane tel que le 3-glycidoxypropyltriméthoxysilane (GTMS) avec un catalyseur acide organique tel que l'acide acétique.

Les sols sont des sols très dilués ayant par exemple un extrait sec de l'ordre de 3 à 5% ; pour des concentrations plus élevées des problèmes d'adhérence du film sont mentionnées.

Ces sols dilués ne permettent le dépôt que de couches ou films fins, par exemple d'une épaisseur sèche de 200 jusqu'à 500 nm, par contact prolongé avec la surface. Le film obtenu a certes une bonne adhérence sur le support et permet l'adhérence ultérieure de primaire ou de peintures mais ne possède pas de propriétés intrinsèques de résistance à la corrosion.

En d'autres termes, ce document concerne fondamentalement des films promoteurs d'adhérence, et ne cite pas de propriétés anti-corrosion particulières intrinsèques liées de manière inhérente au film sol-gel en liaison avec l'application par pulvérisation de produits concentrés.

Enfin, dans le cas de l'application d'une peinture, d'un primaire, d'une colle ou d'un mastic, celle-ci doit être réalisée dans un délai très court après le séchage du film.

Le document US-A-5,814,137 décrit un traitement de surface pour des surfaces métalliques, en particulier en alliages de titane ou d'aluminium, qui utilise un film sol-gel pour former un revêtement de surface, utile comme interface, pour améliorer l'adhésion entre le métal et une résine organique ou un adhésif.

Le film sol-gel, appliqué seul, ne fournit que peu ou pas de résistance à la corrosion et favorise l'adhésion par l'intermédiaire d'un agent de couplage organométallique à la surface du métal.

Un sol est utilisé pour préparer le film sol-gel à la surface du substrat métallique, ce sol est une solution diluée d'un sel organométallique d'alcoxyzirconium stabilisé, tel que le tétra-i-propoxy zirconium ou le tétra-n-propoxy zirconium (TPOZ), d'un agent de couplage organosilane tel que le 3-glycidoxypropyl triméthoxysilane (GTMS) pour les systèmes époxy ou polyuréthane ou l'amine primaire correspondante pour les compositions polyimides, et d'un catalyseur tel que l'acide acétique pour les formulations aqueuses. Des formulations à base d'alcool sont également décrites.

Le sol est appliqué sur la surface métallique par immersion, pulvérisation ou trempage puis séché pour former le film sol-gel.

Le sol est une solution diluée en ce sens que les concentrations en réactif dans le sol sont de 2% en volume de GTMS et 1% en volume de TPOZ mais il est indiqué qu'une concentration en réactifs légèrement plus élevée à savoir une concentration totale en TPOZ et GTMS de 4,4% peut donner de meilleurs résultats.

La quantité d'acide acétique qui joue notamment le rôle de catalyseur pour l'hydrolyse est de 0,13 moles d'acide acétique glacial pour 0,091 moles d'organosilane, en doublant la concentration d'acide acétique à 0,26 moles l'adhésion est améliorée tandis qu'en passant à 0,39 moles, elle est dégradée.

Il est finalement indiqué qu'il est préférable de réduire au minimum la quantité d'acide acétique.

A la colonne 13 de ce document est cité un sol qui est une solution dans l'isopropanol de 2% de GTMS, 1% de TPOZ, 1% d'acide acétique à 80%.

Les procédés et solutions décrits dans les documents ci-dessus nécessitent pour obtenir un revêtement sol-gel pouvant atteindre jusqu'à plusieurs dizaines de microns le dépôt successif de plusieurs couches superposées et/ou une aspersion ou un ruissellement prolongé, car l'épaisseur déposée par couche est faible.

Du fait du nombre important d'étapes nécessaires pour déposer un revêtement d'épaisseur adéquate, les traitements sol-gel décrits dans ces documents sont difficiles à mettre en oeuvre à une échelle industrielle et leur insertion dans les chaînes chimiques de traitement de surfaces de métaux ne peut être réalisée qu'au prix de moyens considérables et d'une perte importante de productivité.

En outre, les films sol-gel obtenus, utilisés seuls, c'est-à-dire sans primaires, dans les documents cités plus haut, présentent encore des performances insuffisantes en matière de protection anti-corrosion telle que définie par les essais de résistance au brouillard salin ou de résistance à la corrosion filiforme.

D'autres compositions de sols pour la préparation de revêtements sols-gels sont décrits dans les documents US-A-4 814 017 et US-A-4 754 012. Ces sols présentent l'inconvénient de contenir de fortes teneurs en solvants organiques.

D'autres documents encore relatifs à des compositions pour la préparation de revêtements sol-gel sont les documents US-A- 6 008 285 ; US-B1-6 228 921 ; et US-B1-6 482 525. et US-B1-6 361 868. Ces documents et notamment les trois premiers cités décrivent de nouveau des compositions à teneurs élevées en solvants organiques. En outre, les revêtements obtenus ont essentiellement pour but de conférer une résistance anti-rayures à des substrats en polycarbonate, ce qui implique obligatoirement un traitement préalable du polycarbonate avec un silane.

En résumé, il ressort de ce qui précède, que l'essentiel des inconvénients des sols et procédés sols-gels de l'art antérieur proviennent de la présence de teneurs élevées en solvants, et/ou d'une mise en oeuvre compliquée, et/ou de performances anticorrosion faibles du film sol-gel seul.

Il existe donc, au vu de ce qui précède un besoin pour un sol ou solution ainsi que pour un procédé de traitement d'une surface par exemple d'une surface en métal qui permette la préparation d'un revêtement sol-gel d'épaisseur sèche relative importante, selon les besoins et le cas considérés, en un nombre limité d'étapes.

Il existe en outre un besoin pour un sol ou une solution ainsi que pour un procédé de traitement d'une surface par exemple en métal qui permette d'obtenir un revêtement sol-gel avec une résistance à la corrosion améliorée définie notamment par l'essai de traitement au brouillard salin.

Cette amélioration de la protection doit être atteinte sans que les autres propriétés du revêtement sol-gel, décrites notamment dans les documents cités ci-dessus ne soient affectées, il s'agit par exemple de l'adhérence sur le support par exemple métallique, de la flexibilité, de la résistance à la corrosion filiforme, de l'adhérence des primaires et peintures sur le revêtement sol-gel, et de la résistance aux rayures, aux produits chimiques et à l'usure.

Il existe encore un besoin pour un sol qui contienne une teneur faible ou nulle en solvants, notamment en solvants nocifs ou toxiques, et en autres composés susceptibles d'avoir une influence négative sur l'environnement.

Il existe enfin un besoin pour un procédé de préparation d'un revêtement sol-gel sur une surface, par exemple une surface en métal, qui soit simple, fiable, facile à mettre en oeuvre, qui comporte un nombre limité d'étapes et qui puisse être facilement intégré dans les procédés existant de traitements de surface, par exemple de surfaces en métal, sans occasionner de modifications importantes de ces derniers et avec de faibles investissements.

Le but de l'invention est de fournir un sol destiné au revêtement par voie sol-gel d'une surface, par exemple d'une surface comprenant un métal, et un procédé de préparation d'un revêtement sol-gel sur une surface, par exemple une surface comprenant un métal ou un alliage de métal mettant en oeuvre ledit sol, qui répondent entre autres aux besoins énumérés ci-dessus, et qui satisfont aux critères, exigences mentionnés plus haut.

Le but de l'invention est encore de fournir un sol et un procédé de préparation d'un revêtement sol-gel sur une surface, par exemple une surface comprenant un métal ou un alliage de métal, qui ne présentent pas les inconvénients, défauts, limitations et désavantages des sols et procédés de l'art antérieur et qui résolvent les problèmes des sols et procédés de l'art antérieur.

Ce but et d'autres encore sont atteints, conformément à l'invention par un sol pour le revêtement par voie sol-gel d'une surface, ledit sol comprenant en pourcentage en poids :
a)- 3 à 30%, de préférence 5 à 20%, de préférence encore 7 à 15%, mieux 8 à 14%, mieux encore 10 à 13%, par exemple 10,8% ou 12% d'au moins un composé organométallique du zirconium, de l'aluminium, ou du titane ;
b)- 5 à 50%, de préférence 5 à 40%, de préférence encore 10 à 40%, mieux 15 ou 20 à 30%, par exemple 22% ou 23% d'au moins un composé organosilane ;
c)- 1 à 15%, de préférence 2 à 10%, de préférence encore 3 à 8%, par exemple 5%, d'au moins un composé choisi parmi les acides, les bases, les glycols et l'éthoxyéthanol ;
d)- le complément à 100% d'eau déminéralisée ou distillée ;
la teneur totale en a) et b) étant supérieure à 30%, de préférence supérieure à 31,2 ; 31,5 ; 32 ; ou 33%, de préférence encore supérieure à 35%, mieux supérieure à 40%, mieux encore supérieure à 50%.

Les pourcentages en poids donnés ci-dessus sont généralement équivalents aux pourcentages en volume.

De préférence, ledit sol comprend moins de 5%, de préférence moins de 3%, de préférence encore moins de 1% en poids de solvants organiques non toxiques ou nocifs, choisis de préférence parmi les alcools, tels que les alcools aliphatiques de 1 à 10C, non toxiques ou nocifs comme l'isopropanol.

Le sol selon l'invention est fondamentalement différent des sols de l'art antérieur tels que ceux décrits dans les documents mentionnés plus haut, en ce sens que les concentrations des composants a), b) et c), à savoir du composé organométallique, de l'organosilane et du catalyseur par exemple acide sont nettement supérieures à celles mises en oeuvre dans ces documents. En outre, la teneur, concentration, totale en a) et b) est supérieure à 30% ce qui est nettement supérieur à la concentration totale en a) et b) de l'art antérieur.

Cette augmentation de la concentration se fait au détriment de l'eau distillée ou déminéralisée. Ainsi, la concentration en composé organométallique tel que le TPOZ est-elle de 3 à 30% en poids alors que dans l'art antérieur elle est au maximum de 1,25% en poids, de même la concentration en composé organosilane tel que le GLYMO est de 5 à 50% en poids alors que dans l'art antérieur elle est au maximum de 2,50% en poids, enfin la concentration en catalyseur c) par exemple en catalyseur acide tel que l'acide acétique est de 1 à 15% en poids tandis qu'elle est au maximum de 0,60% en poids dans l'art antérieur.

L'augmentation significative de la teneur de chacun des composants est également mise en évidence par l'accroissement de la valeur de l'extrait sec en poids qui passe de 2 à 4% pour les sols de l'art antérieur à des valeurs supérieures à 4%, et pouvant par exemple atteindre jusqu'à 37%, de préférence des valeurs de 4 à 37%, de préférence encore des valeurs de 18 ou 37%, mieux de 20 à 30% avec les sols de l'invention.

L'augmentation de la concentration des composés que l'on peut définir comme les composés précurseurs au revêtement sol-gel, à savoir le composé organométallique et le composé organosilane, est obtenue précisément grâce à l'augmentation du pourcentage de composant c), par exemple d'acide, tel que l'acide acétique, qui permet d'obtenir la compatibilité et la solubilité de tels mélanges concentrés et ce, en restant sensiblement dans les mêmes rapports entre les teneurs en composé organométallique a) et en composé organosilane b) que dans les documents cités plus haut.

Le rapport entre le composé organosilane et le composé organométallique est généralement de 1,5, ou 1,6 à 6, de préférence de 1,8 à 2,5.

Il n'était absolument pas évident au regard des documents de l'art antérieur que l'on puisse préparer de tels sols concentrés, en effet, l'ensemble de ces documents dissuade plutôt d'utiliser des concentrations élevées en composants a) et b) et en composant c) tel que l'acide acétique. En particulier, le document US-B1-6,605,365 indique des problèmes d'adhérence lorsque l'on met en oeuvre des sols concentrés par exemple avec un extrait sec supérieur à 4 ou 5%.

En augmentant les concentrations de ces composants a), b) et c), en faisant en sorte que la teneur, concentration, totale en a) et b) soit supérieure à 30%, de préférence supérieure à 31,2 ; 31,5 ; 32 ; ou 33%, sans utiliser de solvants organiques ou cosolvants supplémentaires, ou bien en utilisant une proportion très faible de ceux-ci, les inventeurs vont donc à l'encontre d'une opinion largement répandue dans ce domaine de la technique, et démontrent que, de manière étonnante, des sols stables et facilement utilisables peuvent être préparés même à des concentrations élevées en augmentant, simultanément à la concentration en composants a) et b), la concentration composant c) par exemple en acide c) au détriment de l'eau distillée ou déminéralisée.

Les sols selon l'invention permettent, de manière étonnante, et précisément du fait de leur concentration élevée, l'obtention de films sols-gels secs d'une épaisseur relativement élevée allant généralement de 500 nm à 20 µm et même plus, selon la formulation, de préférence de 1 ou 2 à 10 µm, de préférence encore de 4 à 5 µm. Cette épaisseur est obtenue en une seule couche, par une seule opération d'application (ou passe), par des techniques telles que le trempage, l'aspersion ou la pulvérisation. De tels films ne peuvent être préparées avec les sols de l'art antérieur que par des dépôts successifs de plusieurs couches et en plusieurs opérations d'application.

En outre, les films préparés à partir des sols concentrés selon l'invention sont d'excellente qualité et ont notamment une épaisseur régulière, sans coulures.

L'augmentation de la concentration des sols selon l'invention est réalisée sans que la teneur en solvants organiques soit accrue, les sols selon l'invention comprenant en effet, au contraire de nombreux sols de l'art antérieur, moins de 5% en poids, de préférence moins de 3% en poids, de préférence encore moins de 1% en poids de solvants organiques.

De plus, lorsque de tels solvants organiques sont inclus dans les compositions de l'invention à ces concentrations très faibles, il s'agit de solvants non toxiques ou nocifs tels que les alcools, de préférence les alcools aliphatiques en 1 à 10C et mieux en 1 à 4C, tels que l'isopropanol.

Grâce notamment à l'augmentation de l'épaisseur sèche déposée par couche qui va par exemple de 0,5 à 2, 3, 4, 5 voire 20 µm ou plus, au lieu généralement de quelques centaines de nanomètres dans l'art antérieur les performances de protection anticorrosion intrinsèques, des films sols-gels obtenus à partir des sols selon l'invention sont notablement améliorées par rapport à celles des films sols-gels obtenus à partir des sols de l'art antérieur.

Ainsi, à titre d'exemple, suivant la nuance d'aluminium ou le métal du support considéré, et selon la température de séchage du film sol-gel, pouvant varier de 0 à 500°C, de préférence de 80°C à 150°C, de préférence encore de 110 à 130°C, voire pouvant atteindre dans le cas d'un traitement de type céramique en fusion jusqu'à 2500°C, il est possible d'obtenir, avec les films sols-gels préparés avec le sol selon l'invention des niveaux de protection au brouillard salin de quelques dizaines à quelques centaines voire milliers d'heures (test ASTM B117). A titre de comparaison avec les revêtements sols-gels de l'art antérieur, la résistance au brouillard salin du film sol-gel seul est inférieure à 24 heures sur un support en aluminium 2024T3 préalablement désoxydé.

Des résultats excellents sont également obtenus pour la corrosion filiforme.

En d'autres termes, il est prouvé que le film selon l'invention procure une protection anti-corrosion qui est fournie par un effet de couche barrière dû au film seul, et ce, même si des agents anti-corrosion ne sont pas incorporés dans le film selon l'invention.

Cet excellent niveau de protection obtenu avec le film sol-gel seul est atteint avec un film dont l'épaisseur sèche va généralement de 500 nm à 20 µm par exemple est de 1,2, 3 ou 4 µm sans nuire aux propriétés que présentent traditionnellement les films sols-gels, et qui sont notamment décrites dans les documents de l'art antérieur cités ci-dessus, à savoir : adhérence sur une grande variété de supports, tels que l'aluminium, le titane, l'acier inoxydable, les matériaux composites, les matières plastiques, les verres, ... éventuellement préalablement traités ; flexibilité ; adhérence de primaires et peintures sur le film sol-gel ; mais aussi résistance aux rayures ; résistance aux produits chimiques ; résistance à l'usure, etc...

C'est là un des avantages supplémentaires du sol dit "concentré" selon l'invention que d'avoir un champ d'utilisation beaucoup plus étendu que les sols dilués de l'art antérieur tels qu'ils sont décrits notamment dans les documents mentionnés plus haut.

En effet, les sols selon l'invention peuvent être utilisés pour préparer non seulement des revêtements sols-gels qui sont des substituts des produits de conversion chromatés, ou des promoteurs d'adhérence pour peintures, mastics, colles comme cela est déjà indiqué dans les documents précités mais aussi des primaires sols-gels, des peintures sols-gels, et des revêtements sols-gels pour applications particulières.

L'invention concerne également un procédé de préparation d'une couche sol-gel sur une surface d'un substrat dans lequel :
- on dépose sur la surface un sol tel que décrit ci-dessus, moyennant quoi on obtient une couche de sol sur la surface du substrat ;
- on sèche ladite couche de sol, moyennant quoi on obtient une couche sol-gel sur la surface du substrat.

Le sol peut être déposé par tout procédé de dépôt connu, par exemple par pulvérisation, aspersion ou trempage.

De préférence, le sol est appliqué par pulvérisation d'une manière très simple analogue à l'application d'une peinture ou d'un vernis.

Le procédé selon l'invention présente tous les avantages découlant de la mise en oeuvre du sol selon l'invention tel qu'il a été décrit plus haut, en particulier le procédé selon l'invention permet de préparer des couches d'une épaisseur sèche importante à savoir généralement de 500 nm à 20 µm en une seule étape, en une seule fois (une seule passe) au lieu de plusieurs étapes dans les procédés de l'art antérieur qui utilisent des sols dilués. Il en résulte un gain de temps important. A titre d'exemple, on peut appliquer un film d'une épaisseur de 2 à 10 µm en quelques secondes d'une manière analogue à l'application d'un vernis ou d'une peinture.

De même, il n'est pas nécessaire avec le procédé de l'invention de réaliser un ruissellement ou une aspersion prolongée comme cela est décrit dans certains documents de l'art antérieur pour obtenir le dépôt d'une couche de même épaisseur.

L'épaisseur sèche voulue de la couche déposée peut être facilement obtenue en modifiant par exemple les réglages du ou des pistolets, le type de pistolet, le nombre de ces pistolets, et la distance d'application. On obtient rapidement une couche épaisse sans contact prolongé ou ruissellement. La couche épaisse obtenue est d'excellente qualité, régulière, et sans coulures.

Le procédé selon l'invention est donc simple, fiable, rapide et d'un coût inférieur aux procédés de l'art antérieur. Ce procédé de préparation d'une couche sol-gel selon l'invention, peut s'intégrer facilement dans une chaîne classique, existante comportant d'autres traitements du substrat antérieurs ou postérieurs à la préparation de la couche sol-gel à moindre coût, sans que cela n'implique de modifications importantes et de perte de productivité.

Enfin, le procédé selon l'invention est respectueux de l'environnement et satisfait aux dernières directives en matière de protection de 1' environnement, directives du fait que le sol a une teneur très faible en solvants organiques, généralement inférieure à 5% en poids, de préférence inférieure à 3% en poids, de préférence encore inférieure à 1% en poids, et que ces solvants sont des solvants ni toxiques ni nocifs tels que les alcools.

Il s'agit là d'une différence et d'un avantage supplémentaire du sol et du procédé de l'invention par rapport aux procédés de l'art antérieur qui mettent en oeuvre des teneurs plus élevées en solvants parfois toxiques, nocifs et inflammables.

De manière avantageuse, le sol peut être chauffé préalablement et/ou pendant le dépôt, il s'est avéré qu'un tel chauffage permettait notamment de catalyser la réaction se produisant dans le sol, et d'améliorer, d'accélérer l'hydrolyse, le séchage et l'application ainsi que la qualité, la régularité, du film obtenu.

Un tel chauffage peut être particulièrement avantageux lorsqu'on procède à des retouches, ou réparations, d'un film sol-gel existant, car le temps de mûrissement est ainsi fortement réduit. Il est par ailleurs préférable et beaucoup plus facile de réaliser un chauffage du sol à appliquer plutôt que du substrat sur lequel doit être appliqué le sol, car le substrat peut présenter une taille et une géométrie telles qu'elles rendent son chauffage difficile à mettre en oeuvre.

Un tel chauffage est particulièrement avantageux lorsque le composé organosilane est choisi, comme on le verra plus loin, parmi les composés dont la réaction d'hydrolyse ne conduit pas à la formation de méthanol. En effet, l'hydrolyse de ces composés est plus lente et le chauffage permet de l'accélérer, en outre, un chauffage maîtrisé peut améliorer là-aussi, la qualité du film obtenu à partir du sol.

En conséquence, le sol pourra être appliqué à une température de 0 à 80°C, de préférence de 20°C à 60°C.

De manière avantageuse, le sol peut être filtré avant son application. Cette filtration peut être réalisée par exemple en disposant un filtre en amont de la buse d'aspersion ou de pulvérisation, ou de tout autre système d'application.

Cette filtration peut être une filtration classique ou bien une filtration plus fine telle qu'une ultrafiltration ou nanofiltration et peut être effectuée par tout dispositif connu de l'homme du métier.

Cette filtration a pour but de retenir les impuretés éventuelles d'une taille généralement de quelques nanomètres à 20 µm.

Il s'est avéré en effet que cette opération de filtration améliorait grandement la qualité du film formé. La qualité du réseau formé bénéficie en effet de l'élimination des impuretés éventuelles contenues dans le sol du fait de l'opération de filtration.

La qualité du réseau formé étant primordiale en termes de propriétés de résistance à la corrosion, ces dernières se trouvent par voie de conséquence améliorées grâce à cette filtration.

Dans une forme de réalisation préférée, particulièrement avantageuse du procédé selon l'invention, le sol déposé, appliqué, sur la surface du substrat est préparé, obtenu par simple mélange, éventuellement avec chauffage dans les conditions définies plus haut, de seulement deux produits, constituants, liquides, concentrés, dénommés partie A et partie B tandis que dans l'art antérieur, tel que défini par exemple dans la plupart des documents mentionnés plus haut, le sol est préparé par mélange de quatre produits ou constituants, voire plus.

La partie A qui est sous forme liquide comprend les composants a), c) et d) du sol déjà décrits, tandis que la partie B, également sous forme liquide comprend le composant b) du sol, déjà décrit.

Ces deux constituants liquides (partie A et partie B) sont très faciles à mélanger à l'aide de systèmes classiques d'agitation et même manuellement dans le cas de petites quantités.

La durée de l'agitation est généralement de 5 minutes à 1 heure. L'agitation peut être réalisée généralement à une température de 20°C à 80°C suivant la vitesse d'hydrolyse désirée.

Les deux parties A et B sont stables au stockage et sont généralement placées chacune dans un emballage, récipient, adapté, pour des durées allant généralement de quelques mois à 2 ans moyennant une simple homogénéisation éventuelle avant utilisation. Le mélange des deux parties A et B est également stable.

Après mélange des parties A et B citées, le sol produit est applicable dans un délai généralement de 0 minute à 24 mois, de préférence de 0 minute à 12 mois, de préférence encore de 30 minutes à 8 heures, par exemple dans un délai inférieur ou égal à 1 heure, après le début du mélange.

L'invention concerne en outre une trousse ou "kit" comprenant :
- un premier récipient ou emballage contenant une première partie A sous forme liquide comprenant les composants a), c) et d),
- un second récipient contenant une seconde partie B sous forme liquide comprenant le composant b).

Par exemple la partie B peut être constituée par le silane liquide pur.

La partie A représente généralement de 50 à 90%, de préférence de 60 à 90% en poids du produit, sol, final obtenu, et la partie B représente généralement de 10 à 50%, de préférence de 10 à 40% en poids du produit, sol, final obtenu. Un tel kit est facile à stocker et à mettre en oeuvre.

L'invention concerne aussi une couche sol-gel susceptible d'être préparée par le procédé ci-dessus et un substrat, objet dont au moins une surface est revêtue par au moins une telle couche sol-gel. Des exemples de ces substrats, objets sont par exemple les aéronefs.

L'invention est en outre relative à l'utilisation de ladite couche sol-gel préparée par le procédé selon l'invention, pour conférer des propriétés de résistance à la corrosion à une surface d'un substrat, en particulier à une surface en un matériau choisi parmi les métaux, les alliages de métaux et les matériaux composites comprenant un métal ou un alliage de métal.

Avantageusement, ladite surface n'est revêtue que par ladite couche sol-gel, autrement dit ladite couche sol-gel est mise en oeuvre seule sur la surface.

Il s'est en effet avéré que la couche sol-gel selon l'invention, ou préparée par le procédé selon l'invention, permettait, de manière étonnante, à elle seule - sans qu'aucune autre couche de peinture, primaire ou autre, ne soit utilisée - de conférer des propriétés de résistance à la corrosion à ladite surface. Cela permet d'éviter le dépôt d'autres couches et entraîne une économie d'argent, de temps et de poids, ce qui est particulièrement intéressant par exemple dans le domaine de l'aéronautique.

L'invention concerne en outre un procédé de préparation d'un revêtement comprenant plusieurs couches sur une surface d'un substrat, au moins une de ces couches étant une couche sol-gel préparée par le procédé tel que décrit ci-dessus.

En particulier, l'invention concerne en outre un procédé de préparation d'un d'un revêtement comprenant plusieurs couches sur une surface d'un substrat dans lequel :
- on prépare sur ladite surface une couche sol-gel ; puis
- on applique sur ladite couche sol-gel une ou plusieurs autres couches choisies par exemple parmi les couches de peinture, primaire, mastic, colle, ou résine.

La ou lesdites couches autres que la couche sol-gel peuvent être appliquées sur la couche sol-gel immédiatement après la préparation de celle-ci, à savoir après le séchage, ou bien la ou lesdites couches peuvent être appliquées sur la couche sol-gel dans un certain délai après la préparation de celle-ci, par exemple un délai de un mois à dix ans.

En effet, la couche sol-gel possédant à elle seule des propriétés anti-corrosion, il n'est pas nécessaire de la pourvoir aussitôt d'autres couches, celles-ci pourront être préparées ultérieurement lors d'une réparation ou inspection, éventuellement après un nettoyage léger.

Le revêtement peut comprendre plusieurs couches sols-gels identiques ou différentes choisie(s) par exemple parmi les couches sols-gels aux propriétés particulières décrites plus bas et éventuellement une ou plusieurs autres couches choisies par exemple parmi les couches de peinture, primaire, mastic, colle ou résine.

L'invention sera mieux comprise à la lecture de la description détaillée qui va suivre qui est faite essentiellement en relation avec le procédé de préparation d'une couche sol-gel sur une surface d'un substrat.

Ce procédé comprend tout d'abord le dépôt sur ladite surface d'un sol afin d'obtenir une couche de sol sur la surface du substrat.

Le substrat selon l'invention peut être tout matériau pouvant recevoir une couche de type sol-gel. Le procédé selon l'invention s'applique à des matériaux très divers avec d'excellents résultats quant aux propriétés de la couche obtenue.

Le substrat est généralement en un matériau choisi parmi les métaux ; les alliages de métaux ; les verres organiques ou minéraux ; les matériaux organiques tels que les matières plastiques ; le bois ; les papiers ; les céramiques ; les textiles ; les bétons ; la pierre ; et les matériaux composites comprenant plusieurs de ces matériaux. Ces matériaux peuvent être éventuellement plaqués et/ou avoir subi un traitement de surface et/ou être revêtus par exemple peints.

Le matériau du substrat peut être notamment choisi parmi l'aluminium ; le titane ; le cuivre ; le fer ; et les alliages de ceux-ci comme les aciers tels que les aciers inoxydables, et l'Inconel.

Parmi les alliages d'aluminium, on peut citer les nuances 6056, 2024 et 7075.

Parmi les alliages de titane, on peut citer les alliages le Ti-6-4, le Ti-15-3-3-3, le Ti-6-2-2-2-2 et le Ti-3-2.5.

Le substrat peut avoir une forme quelconque mais il a généralement la forme d'une plaque, tôle ou feuille. Le procédé selon l'invention permet cependant le dépôt de couches sur des surfaces de géométrie même très complexe. La surface sur laquelle est déposée la couche peut n'être qu'une partie de la surface totale du substrat, mais il peut s'agir aussi de la totalité de ladite surface, par exemple on peut avec le procédé selon l'invention déposer une couche sur les deux faces d'un substrat en feuille.

Préalablement au dépôt du sol sur la surface, il est généralement préférable de nettoyer et/ou d'activer et/ou de décaper la surface par exemple par un traitement chimique, et/ou physique, et/ou mécanique.

En effet, ce nettoyage est important afin d'obtenir une bonne adhésion de la couche déposée. Ces procédés de nettoyage sont connus de l'homme du métier : il peut s'agir d'un nettoyage par voie humide par exemple par des solutions acides ou basiques, d'un dégraissage alcalin ou par solvant ou bien d'un nettoyage par voie sèche, par exemple par grenaillage et/ou sablage et/ou flammage.

Pour certains supports, un traitement particulier, du type promoteur d'adhérence, peut être ajouté.

De tels traitements de nettoyage et/ou d'activation sont connus de l'homme du métier et sont largement décrits dans l'art antérieur, en particulier dans les documents de l'art antérieur cités plus haut tel que US-A-5 869 141, à la description desquels on pourra se référer.

La surface peut être éventuellement revêtue d'une couche de traitement de surface choisie parmi les couches de conversion simples chromatées, les couches d'anodisation, autres, c'est notamment le cas dans la cadre de la réparation de matériels existants. C'est donc sur la surface de cette dernière couche que le dépôt du sol est effectué.

Sur la surface, de préférence nettoyée et activée, on effectue le dépôt d'un sol qui est, selon l'invention, un sol concentré qui comprend les composants suivants, dont les quantités sont exprimées en pourcentages en poids :
a)- 3 à 30%, de préférence 5 à 20%, de préférence encore 7 à 15%, mieux 8 à 14%, mieux encore 10 à 13%, par exemple 10,8% ou 12% d'au moins un composé organométallique du zirconium, de l'aluminium, ou du titane ;
b)- 5 à 50%, de préférence 5 à 40%, de préférence encore 10 à 40%, mieux 15 ou 20 à 30%, par exemple 22% ou 23% d'au moins un composé organosilane ;
c)- 1 à 15%, de préférence 2 à 10%, de préférence encore 3 à 8%, par exemple 5%, d'au moins un composé choisi parmi les acides, les bases, les glycols et l'éthoxyéthanol ;
d)- le complément à 100% d'eau déminéralisée ou distillée ;
la teneur totale en a) et b) étant supérieure à 30%, de préférence supérieure à 31,2 ; 31,5 ; 32 ; ou 33%, de préférence encore supérieure à 35%, mieux supérieure à 40%, mieux encore supérieure à 50%.

Le sol selon l'invention est un sol concentré, par comparaison avec les sols de l'art antérieur dans lesquels l'extrait sec en poids est généralement de 2 à 4%. Le sol selon l'invention a généralement un extrait sec en poids de plus de 4%, et pouvant aller par exemple jusqu'à 37% voire plus, de préférence l'extrait sec est de 4 à 37%, de préférence encore l'extrait sec est de 18 à 37%, de préférence encore de 20 à 30%.

Par rapport aux sols de l'art antérieur, les divers composants a), b) et c) voient leurs concentrations augmentées de manière significative, en particulier l'augmentation du pourcentage de composant c) par exemple d'acide, dans la formulation totale permet pour des concentrations plus élevées en composants a) et b) d'obtenir la compatibilité et la solubilité de ces mélanges concentrés.

Le rapport entre les teneurs en composé organométallique a) tel que le TPOZ et en composé organosilane tel que le GLYMO reste cependant dans les mêmes rapports que dans l'art antérieur. Généralement, le rapport entre le composé organosilane tel que le TPOZ et le composé organométallique tel que le GLYMO est de 1,5 ou 1,6 à 6, de préférence de 1,8 à 2,5.

Il est évident que le degré de dilution, c'est-à-dire la quantité de solvant a), par exemple d'eau, incorporée dans le sol selon l'invention peut être ajusté selon les performances et l'épaisseur recherchée. De même, le rapport entre le composé organométallique tel que le TPOZ et le composé organosilane, tel que le GLYMO peut être modifié selon les performances prioritaires recherchées. Une augmentation de ce rapport aura généralement pour conséquence d'améliorer la dureté du film obtenu et les performances anti-corrosion, aussi bien pour ce qui est de l'essai au brouillard salin que de la corrosion filiforme.

Le composé organométallique a) est choisi parmi les composés dont le métal est choisi parmi le zirconium, le titane, et l'aluminium. De tels composés sont décrits par exemple dans les documents déjà cités plus haut et dans le document US-B1-6 361 868 à la description desquels on pourra se référer.

Le composé a) répond généralement à la formule (I) ou à la formule (II) suivantes :

RₓM⁴⁺R'₄₋ₓ (I),

RₓAl³⁺R'₃₋ₓ (II),

dans lesquelles M représente Zr ou Ti, R représente un radical séparable, éliminable, par exemple hydrolysable, R' représente un radical non séparable, non éliminable par exemple non hydrolysable, et x vaut de 1 à 4 dans le cas de la formule (I) ou de 1 à 3 dans le cas de la formule (II), et si plusieurs radicaux R et/ou R' sont présents dans un composé de formule (I) ou de formule (II), ils peuvent être respectivement identiques ou différents.

Par radical séparable, éliminable, par exemple hydrolysable, on entend un radical qui se sépare, est éliminé de l'atome de métal M (Zr, Ti ou A1) lorsque le composé est mis en contact avec le solvant tel que l'eau (hydrolyse) et qui ne reste pas lié à l'atome de métal.

Par radical non séparable, non éliminable, par exemple hydrolysable, on entend un radical qui n'est pas séparé, éliminé, de l'atome de métal M lorsque le composé est mis en contact avec le solvant d) tel que de l'eau (hydrolyse) et qui reste lié à l'atome de métal M.

Le (ou les) radical (radicaux) éliminable(s), séparable(s) hydrolysable(s), R est (sont) généralement choisi parmi les halogènes tels que F, Cl, Br, I en particulier Cl et Br ; les groupes alcoxy, de préférence les groupes alcoxy linéaires ou ramifiés en C₁ à C₁₀. de préférence encore en C₁ à C₅, mieux en C₂ à C₄, tels que par exemple les groupes méthoxy, éthoxy, n-propoxy, i-propoxy, n-butoxy, i-butoxy, sec-butoxy, tert-butoxy, n-pentyloxy, et n-hexyloxy ; les groupes cycloalkyloxy, de préférence en C₃ à C₁₀, tel que par exemple le groupe cyclopropyloxy ; le groupe cyclohexyloxy ; les groupes aryloxy, de préférence les groupes aryloxy en C₆ à C₁₀, tels que par exemple le groupe phénoxy ; les groupes acyloxy, de préférence les groupes acyloxy en C₁ à C₄, tels que par exemple les groupes acétoxy et propionyloxy ; les groupes alkylcarbonyle par exemple le groupe acétyle ; les groupes alcoxy (en C₁ à C₆)-alkyle (en C₂ à C₃) (à savoir un groupe dérivé d'un alkyle en C₁ à C₆-éthylène glycol ou propylène glycol). Les groupes alcoxy, en particulier le groupe méthoxy, et plus particulièrement le groupe éthoxy sont les radicaux hydrolysables préférés.

Le ou les groupes R peuvent éventuellement comprendre en outre un ou plusieurs substituants choisis généralement parmi les halogènes et les groupes alcoxy.

Le radical ou les radicaux R' non éliminables, non séparables, par exemple non hydrolysables est (sont) généralement choisi(s) parmi l'hydrogène ; le groupe hydroxyle ; les groupes alkyle, de préférence les groupes alkyle linéaires ou ramifiés en C₁ à C₁₀, de préférence encore en C₁ à C₄, tels que par exemple les groupes méthyle, éthyle, propyle, n-butyle, i-butyle, sec-butyle et tertiobutyle ; les groupes alcényle, de préférence les groupes alcényle en C₂ à C₄, tels que par exemple les groupes vinyle, 1-propényle, 2-propényle et butényle ; les groupes alcinyles, de préférence les groupes alcinyles en C₂ à C₄, tels que par exemple les groupes acétylényle et propargyle ; les groupes aryle, de préférence les groupes aryle en C₆ à C₁₀, tels que les groupes phényle et naphtyle ; les,groupes méthacryle et méthacryloxy-propyle. Le ou les groupes R' peuvent éventuellement comprendre en outre un ou plusieurs substituants choisis généralement parmi les halogènes et les groupes alcoxy.

Les composés organométalliques préférés sont les composés de formule MR₄ (M=Zr ou Ti) ou AlR₃ où R a déjà été défini plus haut.

Parmi ces composés, des composés encore préférés sont les composés dans lesquels les 3 ou 4 radicaux R sont identiques et représentent le même groupe tel qu'un groupe alcoxy, aryloxy ou cycloalkyloxy.

Les composés préférés entre tous sont les tétra(alcoxyde) de zirconium ou de titane, et les tri (alcoxyde) d'aluminium, notamment les tétra(alcoxydes) de zirconium. Des composés encore plus préférés sont le tétra-n-propoxy zirconium ("TPOZ") et le tétra-i-propoxy-zirconium.

Le sol peut ne comprendre qu'un seul composé organométallique tel qu'un alcoxyde d'aluminium, de titane ou de zirconium par exemple le tétra-n-propoxy zirconium (TPOZ).

Ou bien, le sol peut comprendre plusieurs composés organométalliques choisis par exemple parmi les alcoxydes des métaux cités plus haut et parmi d'autres composés.

Des exemples de composés organométalliques du composant a) sont les suivants :
Al(OCH₃)₃, Al(OC₂H₅)₃, Al(O-n-C₃H₇)₃,
Al(O-i-C₃H₇)₃, Al(OC₄H₉)₃, Al(O-i-C₄H₉)₃,
Al (O-sec-C₄H₉)₃, AlCl₃, AlCl (OH)₂, Al (OC₂H₄OC₄H₉)₃,
TiCl₄, Ti(OC₂H₅)₄, Ti(OC₃H₇)₄,
Ti (O-i-C₃H₇)₄, Ti (OC₄H₉)₄, Ti (2-éthylhexoxy)₄,
ZrCl₄, Zr(OC₂H₅)₄, Zr(OC₃H₇)₄, Zr(O-i-C₃H₇)₄, Zr(OC₄H₉)₄,
ZrOCl₂, Zr(2-éthylhexoxy)₄.

De manière préférée, le sol selon l'invention comprend un seul composé organométallique choisi parmi les alcoxydes de zirconium, tels que le TPOZ.

Des composés organométalliques qui peuvent être mis en oeuvre dans le sol selon l'invention sont décrits en particulier dans les documents cités plus haut, et notamment dans les documents US-A-6 008 285, US-B1-6 228 921, US-B1-6 482 525, US-B1-6 361 868 à la description desquels on pourra se référer.

Le composé organosilane est un composé qui peut être qualifié, comme c'est le cas dans de nombreux documents de l'art antérieur tel que le document US-A-5,814,137, d'agent de couplage silane.

Le composé organosilane b), est de préférence un composé ayant au moins un radical non éliminable, non séparable, de préférence non hydrolysable lié au silicium, de préférence un radical susceptible d'apporter des propriétés particulières, et au moins un radical séparable, éliminable, hydrolysable lié au silicium. Les termes « éliminable et non éliminable » ont déjà été définis plus haut.

De préférence, le composé organosilane comprend 2 ou 3, en particulier 3, radicaux éliminables, séparables, par exemple hydrolysables, et un ou deux, en particulier un, radical non séparable, non éliminable, par exemple non hydrolysable.

Ledit radical ou lesdits radicaux séparables, éliminables, par exemple hydrolysables est (sont) choisi(s) généralement parmi les halogènes tels que F, Cl, Br, I en particulier Cl et Br ; les groupes alcoxy, de préférence les groupes alcoxy linéaires ou ramifiés en C₁ à C₁₀ de préférence en C₁ à C₅, mieux en C₂ à C₄ tels que les groupes méthoxy, éthoxy, n-propoxy, i-propoxy, n-butoxy, i-butoxy, sec-butoxy, tert-butoxy, n-pentyloxy, et n-hexyloxy ; les groupes cycloalkyloxy, de préférence en C₃ à C₁₀, tels que par exemple le groupe cyclopropyloxy, le groupe cyclohexyloxy ; les groupes aryloxy, de préférence les groupes aryloxy en C₆ à C₁₀ tels que le groupe phénoxy ; les groupes acyloxy, de préférence les groupes acyloxy en C₁ à C₄ tel que par exemple les groupes acétoxy et propionyloxy ; les radicaux alkylcarbonyle tel que le radical acétyle. Les radicaux séparables, éliminables, par exemple hydrolysables préférés sont les radicaux alcoxy et notamment le groupe éthoxy.

Ledit radical ou lesdits radicaux non séparable(s), non éliminable(s), par exemple non hydrolysable est choisi généralement parmi l'hydrogène ; le groupe hydroxyle ; le groupe mercapto ; le groupe cyano ; les groupes alkyle, de préférence les groupes alkyle linéaires ou ramifiés en C₁ à C₁₀, de préférence encore en C₁ à C₄, tels que les groupes méthyle, éthyle, propyle, n-butyle, i-butyle, sec-butyle et tert-butyle ; les groupes alcényle, de préférence les groupes alcényle en C₂ à C₄ tels que les groupes vinyle, 1-propényle, 2-propényle, et butényle ; les groupes alcynyle, de préférence les groupes alcynyle en C₂ à C₉ tels que les groupes acétylényle et propargyle ; les groupes aryle, de préférence les groupes aryle en C₆ à C₁₀ tels que les groupes phényle et naphtyle ; les groupes alkyl-aryle ; les groupes aryl-alkyle ; les groupes (méth)acryle et (méth)acryloxypropyle ; les groupes glycidyle et glycidyloxy ; et les groupes tels que les groupes alkyle, alcényle, alcynyle, alkylaryle, arylalkyle comprenant au moins un groupe choisi parmi les groupes amino, primaire, secondaire ou tertiaire (le radical non hydrolysable est alors par exemple un groupe aminoaryle ou aminoalkyle), amide, alkylcarbonyle, anilino substitué ou non substitué, aldéhyde, cétone, carboxyle, anhydride, hydroxyle, alcoxy, alcoxycarbonyle, mercapto, cyano, hydroxyphényle, alkyl carboxylate, acide sulfonique, acide phosphorique, meth(acryloxyloxy), les groupes comprenant un cycle époxyde tels que glycidyle et glycidiloxy, allyle, vinyle.

Lesdits radicaux séparables, éliminables, hydrolysables et lesdits radicaux non séparables, non éliminables non hydrolysables peuvent être, en outre, éventuellement substitués par un ou plusieurs substituants choisis généralement parmi les groupes alcoxy, les atomes d'halogène.

Les composés organosilanes particulièrement préférés répondent à la formule suivante :

Si(R₁')(R₁)₃ (III),

où les radicaux R₁ sont identiques ou différents les uns des autres, de préférence identiques, et représentent un groupe séparable, éliminable, par exemple hydrolysable tel que défini ci-dessus, de préférence un groupe alcoxy en C₁ à C₄, de préférence encore un groupe éthoxy ou méthoxy ; et R₁' est un radical non séparable, non éliminable, par exemple non hydrolysable tel que défini plus haut, de préférence un groupe glycidyle ou glycidyloxy-alkylène en C₁ à C₂₀, de préférence en C₁ à C₆, par exemple un radical γ-glycidyloxypropyle, un radical β-glycidyloxyéthyle, un radical τ-glycidyloxybutyle, un radical ε-glycidyloxypentyle, un radical ω-glycidyloxyhexyle et un radical 2-(3,4-epoxycyclohexyl)éthyle ; ou un groupe comprenant au moins un groupe amino primaire, secondaire ou tertiaire choisi de préférence parmi les groupes 3-aminopropyle, N-(2-aminoéthyle)-3-aminopropyle, N-[N'-(2'-aminoéthyle)-2-aminoéthyle]-3-aminopropyle.

Avantageusement, le composé organosilane est choisi parmi les composés suivants :
- allyltriméthoxysilane,
- N-(2-aminoéthyl)-3-aminopropyltriméthoxysilane,
- N-[N'-(2'-aminoéthyl)-2-aminoéthyl]-3-aminopropyl-triméthoxysilane,
- 3-aminopropyltriméthoxysilane,
- 3-glycidoxypropyltriméthoxysilane (GLYMO),
- 3-mercaptopropyltriméthoxysilane,
- 3-méthacryloxypropylméthyldiméthoxysilane,
- 3-méthacryloxypropyltriméthoxysilane,
- N-phénylaminopropyltriméthoxysilane,
- vinyltriméthoxysilane.

Parmi les composés énumérés ci-dessus, le composé préféré est le GLYMO.

Selon une forme de réalisation particulièrement préférée et avantageuse de l'invention, le composé organosilane est choisi parmi les composés dont la réaction d'hydrolyse ne conduit pas à la formation de méthanol. En effet, le méthanol est un produit très toxique dont on doit éviter la formation.

La plupart des documents de l'art antérieur et en particulier les brevets des Etats-Unis cités plus haut, ne prennent absolument pas en compte ce critère très important pour la sécurité du personnel procédant au dépôt du sol, et donnent des listes de silanes parmi lesquels de nombreux composés peuvent conduire à la production de méthanol. Le caractère avantageux de la mise en oeuvre de tels silanes se révèle avec encore plus d'acuité avec les sols selon l'invention dont la concentration en silane est beaucoup plus élevée que dans l'art antérieur.

De tels organosilanes qui ne conduisent pas à la production de méthanol lors de l'hydrolyse, sont généralement des composés qui ne comportent pas de groupes tels que les groupes méthoxy, ils peuvent être choisis parmi les composés suivants :
- 3-aminopropyltriéthoxysilane,
- p-aminophénylsilane,
- 3-aminopropyltriéthoxysilane,
- 3-glycidoxypropyldiisopropyléthoxysilane,
- 3-glycidoxypropyltriéthoxysilane,
- (3-glycidoxypropyl)méthyldiéthoxysilane,
- 3-mercaptopropyltriéthoxysilane,
- 3-méthacryloxypropylméthyldiéthoxysilane,
- vinylméthyldiéthoxysilane,
- vinyltriéthoxysilane,
- N-[(3-(triéthoxysilyl)-propyl]-4,5-dihydroximidazole.

De manière plus précise, le GLYMO peut être ainsi remplacé par le GLYEO ou 3-glycidyloxypropyl-triéthoxysilane qui est exempt de radicaux méthoxy. Des essais réalisés en laboratoire ont mis en évidence que le remplacement du GLYMO par le GLYEO dans un sol comprenant par ailleurs les mêmes composants conduisait à un film possédant les mêmes performances, aussi bien en ce qui concerne la qualité du film que les performances anti-corrosion.

Des composés silanes qui peuvent être mis en oeuvre dans le procédé de l'invention sont décrits en particulier dans les documents cités plus haut et dans le document EP-A-0 195 493 à la description desquels on pourra se référer.

Le composant c) que l'on peut qualifier de catalyseur peut être choisi parmi les acides, les bases, les glycols, et d'autres composés tels que l'éthoxyéthanol.

Lorsque le composant c) est un acide, il peut être choisi préférentiellement parmi les acides organiques, les acides minéraux, et leurs mélanges.

Les acides organiques peuvent notamment être choisis parmi les acides carboxyliques tels que les acides monocarboxyliques aliphatiques comme l'acide acétique, les acides polycarboxyliques comme les acides dicarboxyliques et les acides tricarboxyliques par exemple l'acide citrique, et leurs mélanges.

Parmi les acides minéraux, on peut utiliser l'acide nitrique, ou l'acide chlorhydrique et leurs mélanges.

Lorsque le composé c) est une base, il peut être choisi parmi les amines telles que l'éthanolamine, la triéthylamine et leurs mélanges. On utilise une base en particulier dans le cas où les acides seraient à proscrire du fait de la nature du substrat ou du silane mis en oeuvre.

D'autres composés pouvant être mis en oeuvre en tant que composant c) sont décrits dans les documents mentionnés plus haut.

Le solvant d) est de l'eau déminéralisée ou distillée. Un ou des solvants non toxiques ou nocifs tels que des alcools, de préférence des alcools aliphatiques qui comprennent de 1 à 10, mieux de 1 à 4 atomes de carbone, tels que l'éthanol, le n-propanol, l'i-propanol et le n-butanol peuvent être en outre inclus dans le solvant d).

Le solvant préféré est l'eau distillée ou déminéralisée.

Les composants a), b), c) et d) sont les composés essentiels du sol selon l'invention et forment une composition de base à laquelle on peut ajouter selon les besoins et les propriétés souhaitées un ou plusieurs composants additionnels facultatifs décrits dans ce qui suit.

Le sol peut comprendre en outre au moins un agent tensioactif afin d'améliorer les propriétés de mouillage et d'étalement sur les différents substrats mais aussi la qualité du réseau formé et les propriétés anti-corrosion intrinsèques du film sol-gel.

Parmi ces tensioactifs, on peut citer les tensioactifs ioniques, parmi lesquels les sarcosinates tels que le lauroyl-sarcosinate de sodium sous la forme par exemple d'une solution aqueuse à 30% ; et les tensioactifs non ioniques tels que les alcools gras éthoxylés.

Les tensioactifs sont généralement présents à raison de 0,05 jusqu'à 2 ou 3% en poids du sol.

L'amélioration du mouillage par addition de tensioactifs adaptés permet d'obtenir des films réguliers, sans phénomène de refus ou de retrait au séchage sur des surfaces correctement préparées. Les propriétés anti-corrosion éventuelles du tensioactif peuvent ensuite renforcer la qualité de la protection.

Le sol peut en outre comprendre au moins un liant organique qui est généralement une résine ou un polymère choisi par exemple parmi les liants époxydiques, polyuréthanes, vinyliques, polyesters, diols, les liants de type acrylate, et les liants réagissant ou réticulant aux UV ou photopolymérisés, et les résines glycérophtalates. Le liant est en particulier choisi parmi les liants qui sont compatibles avec les mélanges très acides qui peuvent être mis en oeuvre dans les sols selon l'invention.

Des exemples de résines qui conviennent particulièrement sont le produit commercialisé sous le nom de URADIL AZ554 par la société DSM Resins et qui se présente sous la forme d'une émulsion dans l'huile d'une résine alkyde ; et le produit commercialisé sous le nom d'Incorez 170 par la société Industrial Copolymer Limited qui est une résine époxy de type Bisphénol A.

Le liant organique et notamment le liant résine alkyde préféré ou le liant de type époxy préféré cités ci-dessus, est utilisé généralement à une teneur de 0 à 30% sur la base du poids total du sol.

Le liant organique permet d'améliorer les propriétés de souplesse du film afin d'optimiser les caractéristiques de tenue sous contrainte de celui-ci telles que la flexibilité, la teneur au choc et la tenue au froid sous tension, etc....

Le liant organique peut permettre également d'améliorer les propriétés anti-corrosion du film obtenu à partir du sol car il permet d'obtenir des films encore plus épais s'apparentant encore plus à des films de peintures.

Le sol peut comprendre en outre une charge choisie parmi les micas et les talcs, qui, par leurs structures lamellaires peuvent optimiser certaines propriétés comme les propriétés anti-corrosion et les propriétés de résistance du film sol-gel à la rayure.

Le talc et/ou le mica peuvent être incorporés à raison de 1 à 20% en poids, de préférence de 3 à 10% en poids.

Le sol peut comprendre en outre une charge choisi parmi les kaolins qui semble réagir avec les alcoxydes ou entre intimement dans la formation du réseau et permet donc l'obtention de films plus épais en abaissant le coût du produit.

Une telle charge, lorsqu'elle est présente, représente généralement de 3 à 15%, de préférence de 5 à 10% en poids du sol.

Le sol selon l'invention peut comprendre en outre au moins un composé additionnel choisi parmi les composés organométalliques et les composés organosilanes différents des composés organométalliques et organosilanes a) et b) tels que décrits ci-dessus. Lorsqu'ils sont présents de tels composés sont généralement présents à raison de 1 à 10% en poids pour le ou les composé(s) organométalliques additionnels et à raison de 2 à 5% en poids pour le ou les composé(s) organosilane additionnel(s).

Parmi les composés organométalliques additionnels différents des composés a) on peut citer tous les composés organométalliques comprenant un métal autre que le zirconium, l'aluminium et le titane tels que le cérium, l'yttrium, le lanthane, le plomb, l'étain, l'antimoine, le bore, le vanadium, l'indium, le niobium, le bismuth et le hafnium.

On peut citer par exemple tous les alcoxydes-alcoolates de métaux autres que le zirconium, l'aluminium et le titane, ainsi que des composés tels que l'acétate d'yttrium trihydraté, ou d'autres hydrates ; le nitrate d'yttrium ; l'acétate de cérium hydraté ; l'acétylacétonate de cérium hydraté ; le stéarate de cérium ; le nitrate de lanthane hexahydraté ; l'acétate de lanthane hydraté ; et l'acétylacétonate de lanthane.

Parmi les composés organosilanes additionnels différents des composés organosilanes b), on peut citer les composés de formule (IV) :

Si(R₁)₄ (IV)

où R₁ représente un radical éliminable, séparable, hydrolysable tel que déjà défini plus haut, de préférence R₁ est un groupe alcoxy de 1 à 4 atomes de carbone tel que méthoxy, éthoxy, n-propoxy, i-propoxy, sec-butoxy, ou tert-butoxy.

Les composés organosilanes additionnels différents des composés organosilanes b) peuvent ainsi être choisis parmi les silanes fluorés. De tels silanes fluorés sont décrits par exemple dans le document DE-OS-4118184 et le document US-B1-6,361,868 à la description desquels on pourra se référer. Des exemples de ces silanes fluorés sont les suivants :

C₂F₅CH₂-CH₂-SiY₃

n-C₆F₁₃CH₂CH₂-SiY₃

n-C₆F₁₇CH₂CH₂-SiY₃

n-C₁₀F₂₁CH₂CH₂-SiY₃

(Y=OCH₃, OC₂H₅ ou Cl)

i-C₃F₇O- (CH₂) ₃-SiCl₂ (CH₃)

n-C₆F₁₃CH₂CH₂SiCl₂ (CH₃)

n-C₆F₁₃CH₂CH₂SiCl (CH₃)₂.

D'autres silanes fluorés sont décrits dans le document US-B1-6,482,525 et le document EP-A-587 067 à la description desquels on pourra se référer.

Le sol selon l'invention peut comprendre en outre un ou plusieurs sels de métaux, par exemple un ou plusieurs sels de métaux des terres rares. Les sels de terres rares peuvent être choisis parmi les esters de métaux des terres rares tels que les oxalates et acétates de cérium et les chlorures de cérium et de lanthane. Les vanadates de métaux alcalino et alcalino terreux tels que le métavanadate de sodium et le métavanadate de calcium. D'autres sels de métaux sont les borates de métaux alcalinos et alcalino terreux tels que le métaborate de baryum. Le sol selon l'invention peut comprendre toute combinaison de ces sels de métaux. On pourra pour ce qui concerne ces sels se reporter au document US-A-5,806,562.

Les sels de métaux lorsqu'ils sont présents sont généralement présents à une teneur de 0,5 à 5% en poids dans le sol.

Le sol selon l'invention peut comprendre en outre une ou plusieurs matières conductrices choisies parmi par exemple les sels, les électrolytes, les couples rédox, les polymères conducteurs de type polyaniline, les ferrocènes, les polystyrènes sulfurés, les noirs de carbone et tous les autres produits compatibles comprenant un caractère conducteur de charges électriques.

Le sol selon l'invention peut comprendre en outre une matrice colorante choisie parmi les colorants, les pigments et les nacres.

Les pigments peuvent être choisis parmi les pigments à effet décoratif, les pigments utilisés pour améliorer la conductivité, la réflectivité du film.

Un sol particulièrement préféré selon l'invention comprend en pourcentages en poids :
a)- 3 à 30%, de préférence 5 à 20%, de préférence encore 7 à 15%, mieux 8 à 14%, mieux encore 10 à 13%, par exemple 10,8% ou 12% de tétra n-propoxy zirconium (TPOZ), de l'aluminium, ou du titane ;
b)- 5 à 50%, de préférence 5 à 40%, de préférence encore 10 à 40%, mieux 15 ou 20 à 30%, par exemple 22% ou 23% de 3-glycidoxypropyltriméthoxysilane (GLYMO) ;
c)- 1 à 15%, de préférence 2 à 10%, de préférence 3 à 8 %, par exemple 5%, d'au moins un composé choisi parmi les acides, les bases, les glycols et l'éthoxyéthanol ;
d)- le complément à 100% d'eau déminéralisée ou distillée ;
la teneur totale en poids en a) et b) étant supérieure à 30%, de préférence supérieure à 31,2 ; 31,5 ; 32 ; ou 33%, de préférence encore supérieure à 35%, mieux supérieure à 40%, mieux encore supérieure à 50%.

Le GLYMO peut être avantageusement remplacé par le GLYEO.

Le sol peut être préparé dans un certain délai avant le dépôt sur le substrat par mélange des 4 composants principaux a), b), c) et d) définis plus haut, mais dans une forme de réalisation préférée selon l'invention, le sol peut être préparé à partir d'une trousse "kit" en deux parties A et B.

La première partie A, sous forme liquide, comprend les composants a), c) et d) du sol tels qu'ils ont été décrits ci-dessus et la seconde partie B, sous forme liquide, comprend le composant b) du sol tel que défini plus haut. De manière typique la première partie A comprend par exemple un alcoxyde de zirconium (par exemple le TPOZ) hydrolysé dans une solution d'eau distillée contenant de l'acide acétique ainsi qu'éventuellement un ou plusieurs additif(s) et la partie B comprend un silane (tel que le GTMS) ou un mélange de silanes purs.

Le sol à appliquer déposé sur le substrat est obtenu à partir d'un simple mélange de deux produits liquides formés par les parties A et B en lieu et place de quatre produits, voire plus et dont certains sont des solides, dans l'art antérieur. Les deux constituants liquides (parties A et B) sont très faciles à mélanger à l'aide de systèmes d'agitation classiques, ou même manuellement dans le cas de petites quantités. Les deux parties A et B sont stables au stockage en emballage, récipient, correctement adapté sur des durées allant par exemple de 1 mois à 2 ans, moyennant une simple homogénéisation avant utilisation.

La partie A représente généralement de 50 à 90% en poids du sol à préparer et la partie B représente en conséquence généralement de 10 à 50% en poids du sol à préparer.

Après le mélange de tous les composants ou bien deux parties A et B, le sol obtenu peut être appliqué dans un délai de 0 minute à 24, de préférence de 0 minute à 12 mois, de préférence encore de 0 minute à 6 mois, mieux de 30 minutes à 8 heures.

La durée qui s'écoule entre le moment où le sol est préparé par mélange des quatre composants ou des deux parties A et B permet de réaliser un vieillissement du sol. Cette durée dépend des vitesses d'hydrolyse des composés organométalliques par exemple des alcoxydes de zirconium et de l'organosilane.

Une durée de vieillissement optimale est généralement celle pour laquelle le composé du zirconium et le silane sont hydrolysés suffisamment pour que le silicium et le zirconium réagissent avec la surface par exemple la surface métallique du substrat.

Il est à noter que le composé du zirconium est déjà présent sous forme hydrolysée dans la partie A qui comprend de l'eau distillée.

Le dépôt du sol sur la surface, de préférence préalablement nettoyée et/ou activée, peut se faire par toute technique connue de l'homme du métier telle que pulvérisation, aspersion, trempage ; une technique préférée est la technique de pulvérisation.

L'opération de dépôt, application, du sol sur la surface est généralement réalisée à une température de 0 à 80°C, de préférence de 20 à 60°C, par exemple de 50°C.

A l'issue du dépôt, on obtient un substrat dont la surface est revêtue par une couche de sol.

Cette couche de sol est ensuite séchée de manière connue dans ce domaine de la technique. Le séchage est généralement réalisé à une température de 0°C à 500°C, de préférence 50 à 150°C, de préférence encore de 80°C à 130°C pendant une durée par exemple de 1 seconde à 2 heures, de préférence de 5 minutes à 1 heure, de préférence encore de 20 à 30 minutes suivant le mode de séchage utilisé.

Le séchage peut être réalisé par chauffage du substrat à l'air libre ou dans un four ou à l'aide de moyens de chauffage très rapides disponibles sur le marché et connus de l'homme du métier. Le séchage peut en outre être couplé à une réticulation aux U.V.

On peut également réaliser un cycle de séchage tel que celui décrit dans le document US-A-5,814,137 à la colonne 11, lignes 15 à 23.

Ou bien, on peut réaliser un traitement de type céramique par fusion à une température pouvant atteindre jusqu'à 2500°C, par exemple de 800 à 1500°C.

Avantageusement, la couche de sol peut être séchée par des moyens thermiques mobiles tels que des décapeurs thermiques à air pulsé, des moyens de chauffage radiants à infrarouges, etc. notamment dans le cadre de la réparation de matériels existants ou difficilement étuvables en enceintes fermées.

On peut ne déposer qu'une seule couche sol-gel par le procédé selon l'invention, cette couche sol-gel a généralement une épaisseur sèche de 0,5 à 20 pm. Grâce à la concentration élevée des composants du sol selon l'invention, on a vu que d'excellents résultats en matière de résistance à la corrosion pouvant être contenue avec une seule couche sol-gel selon l'invention. Celle-ci a généralement une épaisseur supérieure à celle des couches sol-gel de l'art antérieur préparés à partir de sols dilués à savoir une épaisseur sèche de 0,1 à 0,4 µm, de préférence de 0,2 à 0,3 µm.

On peut aussi déposer plusieurs couches sol-gel en formant ainsi un revêtement multicouche, chaque couche ayant une composition différente de la couche précédente et de la couche suivante, et chaque couche déposée présentant des propriétés différentes, choisies parmi les propriétés énumérées ci-dessous. On peut déposer généralement de 1 à 5 couches, de préférence de 2 à 3 couches.

Selon les divers additifs incorporés dans le sol, la couche sol-gel déposée pourra posséder des propriétés variées.

L'homme du métier peut facilement déterminer quels sont le ou les additifs à incorporer eventuellement dans le sol selon l'invention et comprenant obligatoirement les composants a), b), c) et d) cités plus haut pour obtenir les couches sols-gels possédant les propriétés ci-dessous. On pourra ainsi préparer des couches sol-gel anti-rayure ; sol-gel anti-abrasion ; sol-gel anti-frottement ; sol-gel antibuée ; sol-gel antistatique ; sol-gel antireflet ; sol-gel électroluminescent ; sol-gel photovariable ; sol-gel conducteur(haut et bas K) ; sol-gel supraconducteur ; sol-gel ferroélectrique (piezo et pyro) ; sol-gel barrière (aux gaz ; aux bases, aux acides, aux produits chimiques divers dont les décapants, les fluides hydrauliques tels que le « skydrol ») ; sol-gel antisalissures ; sol-gel thermochrome ; sol-gel luminescent ; sol-gel optique non linéaire ; sol-gel ignifugeant ; sol-gel pour composites ; sol-gel anti-adhérent ; sol-gel isolant ; sol-gel antifouling ; sol-gel primaire ; sol-gel peinture ; sol-gel hydrophobe ; sol-gel hydrophile ; sol-gel poreux ; sol-gel biocide ; sol-gel anti-odeur ; sol-gel anti-usure ; etc.

On peut aussi selon l'invention préparer un revêtement multicouche présentant toute combinaison de propriétés parmi celles énumérées ci-dessus.

L'invention va maintenant être décrite en référence aux exemples suivants, donnés à titre illustratif et non limitatif.

### EXEMPLES

### EXEMPLE 1

Dans cet exemple, on prépare un sol selon l'invention à partir d'une première partie ou composant A et d'une seconde partie ou composant B, on applique ledit sol sur des éprouvettes en aluminium, et on évalue les propriétés de la couche sol-gel préparée.

### 1.1. Fabrication du mélange A

- Dans un bécher de 1 litre parfaitement propre, on pèse exactement 108 g de TPOZ à 70% dans du 1-propanol ;
- Sous légère agitation, on ajoute exactement 50 g d'acide acétique à 96% ;
- Après homogénéisation, on ajoute sous agitation exactement 622 g d'eau distillée ;
- On agite jusqu'à obtention d'un liquide homogène et limpide (environ 1 heure) ;
- Pour accélérer la réaction d'hydrolyse, un chauffage jusqu'à environ 60°C peut être effectué ;
- On filtre sur papier filtre puis on conditionne le mélange dans un flacon parfaitement étanche.

### 1.2 Fabrication du sol

- Dans un bécher de 2 litres parfaitement propre, on verse exactement 680 g du mélange A (composant ou partie A) puis sous agitation, on verse exactement 220 g de GLYMO (glycidoxy-propyl triméthoxysilane à 98%) (composant B ou partie B) ;
- On agite jusqu'à obtention d'une phase homogène et limpide (environ 1 heure) ;
- Pour augmenter la réaction d'hydrolyse, un chauffage jusqu'à 60°C environ peut être réalisé ;
- On filtre le mélange sur papier filtre de laboratoire, puis on conditionne en flacon hermétique.

N.B. : l'extrait sec en poids d'un tel mélange est de l'ordre de 20%.

### 1.3. Application du sol

- On prépare des éprouvettes en aluminium 2024 T3 selon le mode opératoire décrit ci-dessous :
   - dégraissage avec un détergent de type alcalin dilué dans l'eau à une température de 60°C pendant une durée 10 minutes sous agitation ;
   - rinçage à l'eau de ville et à l'eau distillée ;
   - désoxydation avec un mélange acide de type sulfo-nitrique par exemple pendant 10 min de 20 à 50°C ;
   - rinçage à l'eau de ville et à l'eau distillée ;
   - séchage de l'éprouvette avec de l'air chaud pulsé ;
- On place les éprouvettes sur un support dans une cabine de pulvérisation ;
- On applique dans un délai de quelques heures la solution précédemment fabriquée (1.2) à l'aide d'un pistolet pneumatique tel qu'un pistolet pneumatique GRACO DELTA-SPRAY, la pression d'air étant réglée à environ 5-6 bars ;
- On couvre bien la surface de manière identique à l'application d'un primaire ou d'une peinture, puis dans un délai de quelques minutes à 1 heure, on place les éprouvettes à l'étuve réglée à 110°C par exemple ;
- Après un temps variant de quelques minutes à 1 heure, on sort les éprouvettes et on les laisse refroidir.

### 1.4 Examen des éprouvettes

Après refroidissement, la couche « sol-gel » obtenue présente les caractéristiques suivantes :
- Adhérence sur le support d'aluminium ;
- Très bonne adhérence des peintures et primaires appliqués sur la couche sol-gel ;
- Très bonne protection anticorrosion (brouillard salin et corrosion filiforme) du support ;
- Epaisseur déposée variant de 1 à 10 microns (mesurée par un appareil de type ELCOMETER 355) selon les paramètres d'application choisis.

Pour le test dit du brouillard salin, les éprouvettes sont placées dans une enceinte climatique « Q-FOG Cyclic Corrosion tester » de la société Q-PANEL. Les éprouvettes traitées avec le sol selon l'invention ne présentent aucune corrosion après 168 heures.

### EXEMPLE 2

Dans cet exemple, on prépare un sol selon l'art antérieur à partir de composants A, B, C, D. On applique ledit sol sur des éprouvettes en aluminium, et on évalue les propriétés de la couche sol-gel préparée.

### 2.1. Fabrication du sol

- On mélange un composant A constitué de quelques grammes d'acide acétique avec un composant B constitué de quelques grammes d'un alkoxyde de zirconium à 70% dans du N-propanol ;
- On mélange un composant C constitué de quelques grammes de silane GLYMO avec un composant D constitué d'environ 950 grammes d'eau distillée ;
- On mélange le composé (A+B) avec le composé (C+D) ;
- On laisse agir 30 minutes environ.
N.B. : L'extrait sec d'un tel mélange est inférieur à 5% en poids.

### 2.2. Application du sol

On prépare des éprouvettes en aluminium de la même manière que dans l'exemple 1 et on applique le sol par pulvérisation en utilisant les mêmes matériels et les mêmes conditions que ceux décrits précédemment dans l'exemple 1.

### 2.3. Examen des éprouvettes

- Adhérence sur le support d'aluminium ;
- Très bonne adhérence des peintures et primaires appliqués sur la couche sol-gel ;
- Coulures très importantes, mouillage homogène difficle de toute la surface (particulièrement observable lors du séchage) ;
- Epaisseur mesurée après séchage : 200 à 400 nanomètres maximum ;
- Le test au brouillard salin réalisé comme dans l'exemple 1 montre que la protection apportée par la couche sol-gel préparée avec le sol de l'art antérieur est inférieure à 24 heures. On observe même des points de corrosion sur le métal au bout de quelques heures.

## Revendications

1. Sol pour le revêtement par voie sol-gel d'une surface, ledit sol comprenant en pourcentage en poids :
a)- 3 à 30%, de préférence 5 à 20%, de préférence encore 7 à 15%, mieux 8 à 14%, mieux encore 10 à 13%, par exemple 10,8% ou 12% d'au moins un composé organométallique du zirconium, de l'aluminium, ou du titane ;
b)- 5 à 50%, de préférence 5 à 40%, de préférence encore 10 à 40%, mieux 15 ou 20 à 30%, par exemple 22% ou 23% d'au moins un composé organosilane ;
c)- 1 à 15%, de préférence 2 à 10%, de préférence encore 3 à 8%, par exemple 5%, d'au moins un composé choisi parmi les acides, les bases, les glycols et l'éthoxyéthanol ;
d)- le complément à 100% d'eau déminéralisée ou distillée ;
la teneur totale en a) et b) étant supérieure à 30%, de préférence supérieure à 31,2 ; 31,5 ; 32 ; ou 33%, de préférence encore supérieure à 35%, mieux supérieure à 40%, mieux encore supérieure à 50%.

2. Sol selon la revendication 1 comprenant moins de 5%, de préférence moins de 3%, de préférence encore moins de 1% en poids de solvants organiques non toxiques ou nocifs, choisis de préférence parmi les alcools tels que les alcools aliphatiques de 1 à 10C non toxiques ou nocifs.

3. Sol selon la revendication 1 présentant un extrait sec en poids de plus de 4%, de préférence de 4 à 37%, de préférence encore de 18 à 37%, mieux de 20 à 30%.

4. Sol selon l'une quelconque des revendications précédentes, dans lequel le rapport entre le composé organosilane et le composé organométallique est de 1,5 ou 1,6 à 6, de préférence de 1,8 à 2,5.

5. Sol selon l'une quelconque des revendications précédentes, dans lequel le composé organométallique répond à la formule (I) ou à la formule (II) suivante :
RₓM⁴⁺R'₄₋ₓ (I),
RₓAl³⁺R'₃₋ₓ (II),
dans lesquelles M représente Zr ou Ti, R représente un radical séparable, éliminable par exemple hydrolysable, R' représente un radical non séparable, non éliminable par exemple non hydrolysable et x vaut de 1 à 4 dans le cas de la formule (I) ou de 1 à 3 dans le cas de la formule (II), et si plusieurs radicaux R et/ou R' sont présents dans un composé de formule (I) ou de formule (II), ils peuvent être respectivement identiques ou différents.

6. Sol selon la revendication 5, dans lequel le radical ou les radicaux R éliminable(s), séparable(s), par exemple hydrolysable (s), est (sont) généralement choisi parmi les halogènes tels que F, Cl, Br, I en particulier Cl et Br ; les groupes alcoxy, de préférence les groupes alcoxy linéaires ou ramifiés en C₁ à C₁₀, de préférence encore en C₁ à C₅, mieux en C₂ à C₄, tels que par exemple les groupes méthoxy, éthoxy, n-propoxy, i-propoxy, n-butoxy, i-butoxy, sec-butoxy, tert-butoxy, n-pentyloxy, et n-hexyloxy ; les groupes cycloalkyloxy, de préférence en C₃ à C₁₀, tel que par exemple le groupe cyclopropyloxy, le groupe cyclohexyloxy ; les groupes aryloxy, de préférence les groupes aryloxy en C₆ à C₁₀, tels que par exemple le groupe phénoxy ; les groupes acyloxy, de préférence les groupes acyloxy en C₁ à C₄, tels que par exemple les groupes acétoxy et propionyloxy ; les groupes alkylcarbonyle par exemple le groupe acétyle ; les groupes alcoxy (en C₁ à C₆)-alkyle (en C₂ à C₃) (à savoir un groupe dérivé d'un alkyle en C₁ à C₆-éthylène glycol ou propylène glycol) ; le ou les groupes R pouvant éventuellement comprendre, en outre, un ou plusieurs substituants choisi parmi les halogènes et les groupes alcoxy.

7. Sol selon l'une quelconque des revendications 5 et 6, dans lequel le radical ou les radicaux R' non éliminables, séparables par exemple non hydrolysables est (sont) généralement choisi(s) parmi l'hydrogène ; le groupe hydroxyle ; les groupes alkyle, de préférence les groupes alkyle linéaires ou ramifiés en C₁ à C₁₀, de préférence encore en C₁ à C₄, tels que par exemple les groupes méthyle, éthyle, propyle, n-butyle, i-butyle, sec-butyle et tertiobutyle ; les groupes alcényle, de préférence les groupes alcényle en C₂ à C₄, tels que par exemple les groupes vinyle, 1-propényle, 2-propényle et butényle ; les groupes alcinyles, de préférence les groupes alcinyles en C₂ à C₄, tels que par exemple les groupes acétylényle et propargyle ; les groupes aryle, de préférence les groupes aryle en C₆ à C₁₀, tels que les groupes phényle et naphtyle ; les groupes méthacryle et méthacryloxy-propyle ; le ou les groupes R' peuvent éventuellement comprendre, en outre, un ou plusieurs substituants choisis généralement parmi les halogènes et les groupes alcoxy.

8. Sol selon l'une quelconque des revendications 5 à 7, dans lequel le composé organométallique répond à la formule MR₄ ou AlR₃, dans lesquelles M et R sont tels que définis dans la revendication 5.

9. Sol selon la revendication 8, dans lequel les 4 ou 3 radicaux R sont tous identiques et représentent le même groupe, tel qu'un groupe alcoxy, aryloxy ou cycloalkyloxy.

10. Sol selon la revendication 9, dans lequel le composé organométallique est le tétra-n-propoxy zirconium ("TPOZ") ou le tétra-i-propoxy-zirconium.

11. Sol selon l'une quelconque des revendications précédentes, dans lequel le composé organosilane est un composé ayant au moins un radical non éliminable, non séparable, de préférence non hydrolysable et au moins un radical éliminable, séparable, de préférence hydrolysable, lié au silicium.

12. Sol selon la revendication 11, dans lequel le composé organosilane comprend 2 ou 3, en particulier 3, radicaux éliminables, séparables, par exemple hydrolysables, et un ou deux, en particulier un, radical non séparable, non éliminable, par exemple non hydrolysable.

13. Sol selon l'une quelconque des revendications 11 et 12, dans lequel ledit radical ou lesdits radicaux séparable(s), éliminable(s) par exemple hydrolysable(s) est (sont) choisi (s) parmi les halogènes tels que F, Cl, Br, I en particulier Cl et Br ; les groupes alcoxy, de préférence les groupes alcoxy linéaires ou ramifiés en C₁ à C₁₀ de préférence en C₁ à C₅, mieux en C₂ à C₄ tels que les groupes méthoxy, éthoxy, n-propoxy, i-propoxy, n-butoxy, i-butoxy, sec-butoxy, tert-butoxy, n-pentyloxy, et n-hexyloxy ; les groupes cycloalkyloxy, de préférence en C₃ à C₁₀, tels que par exemple le groupe cyclopropyloxy, le groupe cyclohexyloxy ; les groupes aryloxy, de préférence les groupes aryloxy en C₆ à C₁₀ tels que le groupe phénoxy ; les groupes acyloxy, de préférence les groupes acyloxy en C₁ à C₄ tel que par exemple les groupes acétoxy et propionyloxy ; les radicaux alkylcarbonyle tel que le radical acétyle.

14. Sol selon l'une quelconque des revendications 11 et 12, dans lequel ledit radical ou lesdits radicaux non séparable(s), non éliminable(s), par exemple non hydrolysable (s) est (sont) choisi (s) parmi l'hydrogène ; le groupe hydroxyle ; le groupe mercapto ; le groupe cyano ; les groupes alkyle, de préférence les groupes alkyle linéaires ou ramifiés en C₁ à C₁₀, de préférence encore en C₁ à C₄, tels que les groupes méthyle, éthyle, propyle, n-butyle, i-butyle, sec-butyle et tert-butyle ; les groupes alcényle, de préférence les groupes alcényle en C₂ à C₄ tels que les groupes vinyle, 1-propényle, 2-propényle, et butényle ; les groupes alcynyle, de préférence les groupes alcynyle en C₂ à C₄ tels que les groupes acétylényle et propargyle ; les groupes aryle, de préférence les groupes aryle en C₆ à C₁₀ tels que les groupes phényle et naphtyle ; les groupes alkyl-aryle ; les groupes aryl-alkyle ; les groupes (méth)acryle et (méth)acryloxypropyle ; les groupes glycidyle et glycidyloxy ; et les groupes tels que les groupes alkyle, alcényle, alcynyle, alkylaryle, arylalkyle comprenant au moins un groupe choisi parmi les groupes amino, primaire, secondaire ou tertiaire - le radical non hydrolysable étant alors par exemple un groupe aminoaryle ou aminoalkyle - amide, alkylcarbonyle anilino substitué ou non substitué, aldéhyde, cétone, carboxyle, anhydride, hydroxyle, alcoxy, alcoxycarbonyle, mercapto, cyano, hydroxyphényle, alkyl carboxylate, acide sulfonique, acide phosphorique, meth(acryloxyloxy), les groupes comprenant un cycle époxyde tels que glycidyl et glycidiloxy, allyle, vinyle.

15. Sol selon l'une quelconque des revendications 11 à 14, dans lequel lesdits radicaux séparables et non séparables sont, en outre, éventuellement substitués par un ou plusieurs substituant(s) choisis généralement parmi les groupes alcoxy et les atomes d'halogène.

16. Sol selon l'une quelconque des revendications 11 à 15, dans lequel le composé organosilane répond à la formule (III) suivante :
Si (R₁') (R₁)₃ où les radicaux R sont identiques ou différents les uns des autres, de préférence identiques, et représentent un groupe séparable, éliminable, par exemple hydrolysable tel que défini dans la revendication 13, de préférence un groupe alcoxy en C₁ à C₄, de préférence encore un groupe éthoxy ou méthoxy ; et R₁' est un radical non éliminable, non séparable, par exemple non hydrolysable tel que défini dans la revendication 14, de préférence un groupe glycidyle ou glycidyloxy-alkylène en C₁ à C₂₀, de préférence en C₁ à C₆, par exemple un radical γ-glycidyloxypropyle, un radical β-glycidyloxyéthyle, un radical τ-glycidyloxybutyle, un radical ε-glycidyloxypentyle, un radical ω-glycidyloxyhexyle et un radical 2-(3,4-epoxycyclohexyl)éthyle ; un groupe comprenant au moins un groupe amino primaire, secondaire ou tertiaire choisi de préférence parmi les groupes 3-aminopropyle, N-(2-aminoéthyle)-3-aminopropyle, N-[N'-(2'-aminoéthyle)-2-aminoéthyle]-3-aminopropyle.

17. Sol selon l'une quelconque des revendications 11 à 16, dans lequel le composé organosilane est choisi parmi les composés suivants :
- allyltriméthoxysilane,
- N-(2-aminoéthyl)-3-aminopropyltriméthoxysilane,
- N-[N'-(2'-aminoéthyl)-2-aminoéthyl]-3-aminopropyltriméthoxysilane,
- 3-aminopropyltriméthoxysilane,
- 3-glycidoxypropyltriméthoxysilane,
- 3-mercaptopropyltriméthoxysilane,
- 3-méthacryloxypropylméthyldiméthoxysilane,
- 3-méthacryloxypropyltriméthoxysilane,
- N-phénylaminopropyltriméthoxysilane,
- vinyltriméthoxysilane.

18. Sol selon la revendication 17, dans lequel le composé organosilane est le 3-glycidoxypropyltriméthoxysilane(GLYMO).

19. Sol selon l'une quelconque des revendications 1 à 16, dans lequel le composé organosilane est choisi parmi les composés dont la réaction d'hydrolyse ne conduit pas à la formation de méthanol.

20. Sol selon la revendication 19, dans lequel le composé organosilane est choisi parmi les composés suivants :
- 3-aminopropyltriéthoxysilane,
- p-aminophénylsilane,
- 3-aminopropyltriéthoxysilane,
- 3-glycidoxypropyldiisopropyléthoxysilane,
- 3-glycidoxypropyltriéthoxysilane,
- (3-glycidoxypropyl)méthyldiéthoxysilane,
- 3-mercaptopropyltriéthoxysilane,
- 3-méthacryloxypropylméthyldiéthoxysilane,
- vinylméthyldiéthoxysilane,
- vinyltriéthoxysilane.

21. Sol selon la revendication 20, dans lequel le composé organosilane est le 3-glycidoxypropyltriéthoxysilane (GLYEO).

22. Sol selon l'une quelconque des revendications précédentes, dans lequel le composant c) est un acide choisi parmi les acides organiques, tels que les acides carboxyliques, par exemple les acides monocarboxyliques aliphatiques comme l'acide acétique, les acides dicarboxyliques et tricarboxyliques comme l'acide citrique, et leurs mélanges ; et les acides minéraux tels que l'acide chlorhydrique, l'acide nitrique et leurs mélanges.

23. Sol selon l'une quelconque des revendications précédentes, dans lequel le composant c) est une base choisie parmi les amines telles que l'éthanolamine, la triéthylamine et leurs mélanges.

24. Sol selon l'une quelconque des revendications précédentes, comprenant en outre au moins un agent tensioactif choisi parmi les tensioactifs ioniques tels que les sarcosinates et les tensioactifs non-ioniques tels que les alcools gras éthoxylés.

25. Sol selon l'une quelconque des revendications précédentes comprenant en outre au moins un liant organique.

26. Sol selon l'une quelconque des revendications précédentes comprenant en outre une charge choisie parmi les micas et les talcs.

27. Sol selon la revendication 26, dans lequel la charge est présente à raison de 1 à 20%, de préférence de 3 à 10% par rapport à la formule centésimale en poids.

28. Sol selon l'une quelconque des revendications précédentes comprenant en outre une charge choisie parmi les kaolins.

29. Sol selon l'une quelconque des revendications précédentes comprenant en outre au moins un composé additionnel choisi parmi les composés organométalliques et les composés organosilanes différents des composés organométalliques a) et organosilanes b).

30. Sol selon la revendication 29, dans lequel ledit composé organométallique additionnel différent du ou des composé(s) a) est choisi parmi les composés organométalliques comprenant un métal autre que le zirconium, l'aluminium et le titane, tels que le cérium, l'yttrium, le lanthane, le plomb, l'étain, l'antimoine, le bore, le vanadium, l'indium, le niobium, le bismuth et le hafnium.

31. Sol selon la revendication 30, dans lequel ledit composé organométallique additionnel différent du ou des composé(s) a) est choisi parmi les alcoxydes-alcoolates de métaux autres que le zirconium, et les composés tels que l'acétate d'yttrium trihydraté, ou d'autres hydrates ; le nitrate d'yttrium ; l'acétate de cérium hydraté ; l'acétylacétonate de cérium hydraté ; le stéarate de cérium ; le nitrate de lanthane hexahydraté ; l'acétate de lanthane hydraté ; et l'acétylacétonate de lanthane.

32. Sol selon l'une quelconque des revendications 29 à 31, dans lequel ledit composé organosilane additionnel est un composé de formule (IV) :
Si(R₁)₄ q (IV)
où R₁ représente un radical, éliminable, séparable, hydrolysable tel que défini dans la revendication 16 ; de préférence R₁ est un groupe alcoxy de 1 à 4 atomes de carbone tel que méthoxy, éthoxy, n-propoxy, i-propoxy, sec-butoxy, ou tert-butoxy.

33. Sol selon l'une quelconque des revendications 29 à 31, dans lequel ledit composé organosilane additionnel est un silane fluoré.

34. Sol selon la revendication 33, dans lequel ledit silane fluoré est choisi parmi les composés suivants :
C₂F₅CH₂-CH₂-SiY₃
n-C₆F₁₃CH₂CH₂-SiY₃
n-C₈F₁₇CH₂CH₂-SiY₃
n-C₁₀F₂₁CH₂CH₂-SiY₃
(Y=OCH₃, OC₂H₅ ou Cl)
i-C₃F₇O- (CH₂)₃-SiCl₂ (CH₃)
n-C₆F₁₃CH₂CH₂SiCl₂ (CH₃)
n-C₆F₁₃CH₂CH₂SiCl (CH₃)₂.

35. Sol selon l'une quelconque des revendications précédentes comprenant en outre un ou plusieurs sels de métaux, par exemple un ou plusieurs sels de métaux de terres rares.

36. Sol selon l'une quelconque des revendications précédentes comprenant en outre au moins une matière conductrice.

37. Sol selon l'une quelconque des revendications précédentes comprenant en outre une matière colorante choisie parmi les colorants, pigments, et nacres.

38. Sol selon l'une quelconque des revendications précédentes, comprenant en % en poids :
a)- 3 à 30%, de préférence 5 à 20%, de préférence encore 7 à 15%, mieux 8 à 14%, mieux encore 10 à 13%, par exemple 10,8% ou 12% de tétra n-propoxy zirconium (TPOZ), de l'aluminium, ou du titane ;
b)- 5 à 50%, de préférence 5 à 40%, de préférence encore 10 à 40%, mieux 15 ou 20 à 30%, par exemple 22% ou 23% de 3-glycidoxypropyltriméthoxysilane (GLYMO) ;
c)- 1 à 15%, de préférence 2 à 10%, de préférence 3 à 8 %, par exemple 5%, d'au moins un composé choisi parmi les acides, les bases, les glycols et l'éthoxyéthanol ;
d)- le complément à 100% d'eau déminéralisée ou distillée ;
la teneur totale en poids en a) et b) étant supérieure à 30%, de préférence supérieure à 31,2% ; 31,5%, 32% ; ou 33%, de préférence encore supérieure à 35%, mieux supérieure à 40%, mieux encore supérieure à 50%.

39. Trousse, "kit" comprenant :
- un premier récipient contenant une première partie A sous forme liquide comprenant les composants a), c) et d) du sol tel que défini dans l'une quelconque des revendications 1 à 38 ;
- un second récipient contenant une seconde partie B sous forme liquide comprenant le composant b) du sol tel que défini dans l'une quelconque des revendications 1 à 38.

40. Kit selon la revendication 39, dans lequel la partie A représente de 50 à 90% en poids, de préférence de 60 à. 90% en poids, et la partie B représente de 10 à 50% en poids, de préférence de 10 à 40 en poids du sol à préparer.

41. Procédé de préparation d'une couche sol-gel sur une surface d'un substrat dans lequel :
- on dépose sur la surface un sol selon l'une quelconque des revendications 1 à 38 moyennant quoi on obtient une couche de sol sur la surface du substrat ;
- on sèche ladite couche de sol moyennant quoi on obtient une couche sol-gel sur la surface du substrat.

42. Procédé selon la revendication 41, dans lequel on dépose en une seule opération une couche sol-gel d'une épaisseur sèche de 500 nm à 20 µm, de préférence de 1 ou 2 à 10 µm, de préférence encore de 4 à 5 µm.

43. Procédé selon l'une quelconque des revendications 41 et 42, dans lequel le sol est chauffé préalablement et/ou pendant le dépôt.

44. Procédé selon l'une quelconque des revendications 41 à 43, dans lequel le sol est filtré avant le dépôt.

45. Procédé selon l'une quelconque des revendications 41 à 44, dans lequel le sol est déposé par pulvérisation, aspersion ou trempage.

46. Procédé selon l'une quelconque des revendications 41 et 45, dans lequel le substrat est en un matériau choisi parmi les métaux ; les alliages de métaux ; les verres organiques ou minéraux ; les matériaux organiques tels que les matières plastiques ; le bois ; les céramiques ; les textiles ; les bétons ; les papiers ; la pierre ; et les matériaux composites comprenant plusieurs de ces matériaux ; ces matériaux étant éventuellement plaqués et/ou ayant subi un traitement de surface et/ou étant revêtus par exemple peints.

47. Procédé selon la revendication 46, dans lequel le substrat est en un matériau choisi parmi l'aluminium ; le titane ; le cuivre ; le fer ; et les alliages de ceux-ci comme les aciers tels que les aciers inoxydables, et l'Inconel ; éventuellement plaqués et/ou ayant subi un traitement de surface et/ou étant revêtus par exemple peints.

48. Procédé selon l'une quelconque des revendications 46 et 47, dans lequel le traitement de surface est choisi parmi les couches de conversion simples, chromatées, les couches d'anodisation , ou autres.

49. Procédé selon l'une quelconque des revendications 41 à 48, dans lequel préalablement au dépôt du sol, la surface est nettoyée et/ou activée et/ou décapée par un traitement chimique et/ou physique et/ou mécanique.

50. Procédé selon l'une quelconque des revendications 41 à 49, dans lequel le sol est préparé par mélange des parties A et B telles que définies dans la revendication 39, ou par mélange des composants a), b), c) et d).

51. Procédé selon la revendication 50, dans lequel le sol est appliqué sur la surface du substrat dans un délai de 0 minute à 24 mois, de préférence de 0 minute à 12 mois, de préférence encore de 0 minute à 6 mois, mieux de 30 minutes à 8 heures, après le mélange des parties A et B, ou des composants a), b), c) et d).

52. Procédé selon l'une quelconque des revendications 41 à 51, dans lequel le séchage de la couche de sol est réalisé à une température de 0 à 500°C, de préférence de 50 à 150°C, de préférence encore de 80 à 130°C pendant une durée de 1 seconde à 2 heures, de préférence de 5 minutes à 1 heure, de préférence de 10 à 30 minutes.

53. Procédé selon l'une quelconque des revendications 41 à 52, dans lequel le séchage de la couche de sol est réalisé à l'aide de moyens thermiques mobiles tels que des décapeurs thermiques à air pulsé, ou des moyens de chauffage radiants à infrarouge.

54. Procédé selon l'une quelconque des revendications 41 à 53, dans lequel la couche sol-gel déposée a une épaisseur sèche de 0,5 à 20 µm, de préférence de 1 ou 2 à 10 µm.

55. Procédé selon l'une quelconque des revendications 41 à 54, dans lequel ladite couche sol-gel est une couche choisie parmi les couches sol-gel anti-rayure ; sol-gel anti-abrasion ; sol-gel anti-frottement ; sol-gel antibuée ; sol-gel antistatique ; sol-gel antireflet ; sol-gel électroluminescent ; sol-gel photovariable ; sol-gel conducteur(haut et bas K) ; sol-gel supraconducteur ; sol-gel ferroélectrique (piezo et pyro) ; sol-gel barrière (aux gaz ; aux bases, aux acides, aux produits chimiques divers dont les décapants, les fluides hydrauliques tels que le « skydrol ») ; sol-gel antisalissures ; sol-gel thermochrome ; sol-gel luminescent ; sol-gel optique non linéaire ; sol-gel ignifugeant ; sol-gel pour composites ; sol-gel anti-adhérent ; sol-gel isolant ; sol-gel antifouling ; sol-gel primaire ; sol-gel peinture ; sol-gel hydrophobe ; sol-gel hydrophile ; sol-gel poreux ; sol-gel biocide ; sol-gel anti-odeur ; sol-gel anti-usure ; etc.

56. Couche sol-gel susceptible d'être préparée par le procédé selon l'une quelconque des revendications 41 à 55.

57. Substrat comprenant au moins une surface revêtue par au moins une couche sol-gel selon la revendication 56.

58. Utilisation de la couche sol-gel selon la revendication 56 pour conférer des propriétés de résistance à la corrosion à une surface d'un substrat, en particulier à une surface en un matériau choisi parmi les métaux, les alliages de métaux et les matériaux composites comprenant un métal ou un alliage de métal.

59. Utilisation selon la revendication 58, dans lequel ladite surface n'est revêtue que par ladite couche sol-gel.

60. Procédé de préparation d'un revêtement comprenant plusieurs couches sur une surface d'un substrat, au moins une de ces couches étant une couche sol-gel préparée par le procédé selon l'une quelconque des revendications 41 à 55.

61. Procédé selon la revendication 60, de préparation d'un revêtement comprenant plusieurs couches sur une surface d'un substrat dans lequel :
- on prépare sur ladite surface une couche sol-gel ; puis
- on applique sur ladite couche sol-gel une ou plusieurs autres couches choisies, par exemple, parmi les couches de peinture, primaire, mastic, colle, ou résine.

62. Procédé selon la revendication 61, dans lequel la ou lesdites couches sont appliquées sur la couche sol-gel immédiatement après la préparation de celle-ci.

63. Procédé selon la revendication 62, dans lequel la ou lesdites couches sont appliquées sur la couche sol-gel dans un délai un mois à dix ans après la préparation de la couche sol-gel.

64. Procédé selon l'une quelconque des revendications 60 à 63, dans lequel le revêtement comprend plusieurs couches sol-gel identiques ou différentes et éventuellement une ou plusieurs autres couches.

65. Procédé selon la revendication 64, dans lequel lesdites couches sol-gel sont choisies parmi les couches sol-gel définies dans la revendication 55.

## Claims

1. Sol for the sol-gel coating of a surface, said sol comprising, in per cent by weight:
a)- 3% to 30%, preferably 5% to 20%, more preferably 7% to 15%, especially 8% to 14%, more especially 10% to 13%, for example 10.8% or 12%, of at least one organometallic compound of zirconium, aluminium or titanium;
b)- 5% to 50%, preferably 5% to 40%, more preferably 10% to 40%, especially 15% or 20% to 30%, for example 22% or 23%, of at least one organosilane compound;
c)- 1% to 15%, preferably 2% to 10%, more preferably 3% to 8%, for example 5%, of at least one compound selected from acids, bases, glycols and ethoxyethanol;
d)- the remainder to 100% of demineralized or distilled water;
the total amount of a) and b) being greater than 30%, preferably greater than 31.2%; 31.5%; 32%; or 33%, more preferably greater than 35%, especially greater than 40%, more especially greater than 50%.

2. Sol according to Claim 1, comprising less than 5%, preferably less than 3%, more preferably less than 1% by weight of non-toxic or non-noxious organic solvents, selected preferably from alcohols such as non-toxic or non-noxious 1 to 10C aliphatic alcohols.

3. Sol according to Claim 1, having a weight solids content of more than 4%, preferably of 4% to 37%, more preferably of 18% to 37%, better of 20% to 30%.

4. Sol according to any one of the preceding claims, wherein the ratio of the organosilane compound to the organometallic compound is from 1.5 or 1.6 to 6, preferably from 1.8 to 2.5.

5. Sol according to any one of the preceding claims, wherein the organometallic compound is of the formula (I) or of the formula (II) below:
RₓM⁴⁺R'₄₋ₓ (I),
RₓAl³⁺R'₃₋ₓ (II),
in which M represents Zr or Ti, R represents a separable, removable - for example hydrolysable - radical, R' represents a non-separable, non-removable - for example non-hydrolysable - radical and x is from 1 to 4 in the case of the formula (I) or from 1 to 3 in the case of the formula (II), and, if two or more radicals R and/or R' are present in a compound of formula (I) or of formula (II), they can be, respectively, identical or different.

6. Sol according to Claim 5, wherein the removable, separable - for example hydrolysable -radical or radicals R is or are generally selected from halogens such as F, Cl, Br, and I, in particular Cl and Br; alkoxy groups, preferably C₁ to C₁₀, more preferably C₁ to C₅, especially C₂ to C₄ linear or branched alkoxy groups, such as, for example, methoxy, ethoxy, n-propoxy, isopropoxy, n-butoxy, isobutoxy, sec-butoxy, tert-butoxy, n-pentyloxy and n-hexyloxy groups; cycloalkyloxy groups, preferably C₃ to C₁₀ cycloalkyloxy groups, such as, for example, the cyclopropyloxy group and the cyclohexyloxy group; aryloxy groups, preferably C₆ to C₁₀ aryloxy groups, such as, for example, the phenoxy group; acyloxy groups, preferably C₁ to C₄ acyloxy groups, such as, for example, the acetoxy and propionyloxy groups; alkylcarbonyl groups, for example the acetyl group; (C₁ to C₆) alkoxy-(C₂ to C₃)-alkyl groups (namely a group derived from a C₁ to C₆ alkyl-ethylene glycol or propylene glycol); it being possible for the group or groups R optionally to contain, in addition, one or more substituents selected from halogens and alkoxy groups.

7. Sol according to any of Claims 5 and 6, wherein the non-removable, non-separable - for example non-hydrolysable - radical or radicals R' is or are generally selected from hydrogen; the hydroxyl group; alkyl groups, preferably C₁ to C₁₀, more preferably C₁ to C₄, linear or branched alkyl groups, such as, for example, the methyl, ethyl, propyl, n-butyl, isobutyl, sec-butyl and tert-butyl groups; alkenyl groups, preferably C₂ to C₄ alkenyl groups, such as, for example, the vinyl, 1-propenyl, 2-propenyl and butenyl groups; alkynyl groups, preferably C₂ to C₄ alkynyl groups, such as, for example, the acetylenyl and propargyl groups; aryl groups, preferably C₆ to C₁₀ aryl groups, such as the phenyl and naphthyl groups; methacryl and methacryloxypropyl groups; it being possible for the group or groups R' optionally to contain, in addition, one or more substituents selected generally from halogens and alkoxy groups.

8. Sol according to any one of Claims 5 to 7, wherein the organometallic compound is of formula MR₄ or AlR₃, in which M and R are as defined in Claim 5.

9. Sol according to Claim 8, wherein the 4 or 3 radicals R are all identical and represent the same group, such as an alkoxy, aryloxy or cycloalkyloxy group.

10. Sol according to Claim 9, wherein the organometallic compound is tetra-n-propoxyzirconium ("TPOZ") or tetraisopropoxyzirconium.

11. Sol according to any one of the preceding claims, wherein the organosilane compound is a compound having at least one non-removable, non-separable, preferably non-hydrolysable radical and at least one removable, separable, preferably hydrolysable radical, attached to the silicon.

12. Sol according to Claim 11, wherein the organosilane compound contains 2 or 3, in particular 3, removable, separable - for example hydrolysable - radicals and one or two, in particular one, non-separable, non-removable - for example non-hydrolysable - radical (s) .

13. Sol according to any one of Claims 11 and 12, wherein said separable, removable - for example hydrolysable -radical or radicals is or are selected from halogens such as F, Cl, Br, and I, in particular Cl and Br; alkoxy groups, preferably C₁ to C₁₀, preferably C₁ to C₅, especially C₂ to C₄ linear or branched alkoxy groups such as the methoxy, ethoxy, n-propoxy, isopropoxy, n-butoxy, isobutoxy, sec-butoxy, tert-butoxy, n-pentyloxy and n-hexyloxy groups; cycloalkyloxy groups, preferably C₃ to C₁₀ cycloalkyloxy groups, such as, for example, the cyclopropyloxy group and the cyclohexyloxy group; aryloxy groups, preferably C₆ to C₁₀ aryloxy groups, such as the phenoxy group; acyloxy groups, preferably C₁ to C₄ acyloxy groups such as, for example, the acetoxy and propionyloxy groups; and alkylcarbonyl radicals such as the acetyl radical.

14. Sol according to any one of Claims 11 and 12, wherein said non-separable, non-removable - for example non-hydrolysable - radical or radicals is or are selected from hydrogen; the hydroxyl group; the mercapto group; the cyano group; alkyl groups, preferably C₁ to C₁₀, more preferably C₁ to C₄, linear or branched alkyl groups, such as the methyl, ethyl, propyl, n-butyl, isobutyl, sec-butyl and tert-butyl groups; alkenyl groups, preferably C₂ to C₄ alkenyl groups such as the vinyl, 1-propenyl, 2-propenyl and butenyl groups; alkynyl groups, preferably C₂ to C₄ alkynyl groups such as the acetylenyl and propargyl groups; aryl groups, preferably C₆ to C₁₀ aryl groups such as the phenyl and naphthyl groups; alkylaryl groups; arylalkyl groups; (meth)acryl and (meth)acryloxypropyl groups; the glycidyl and glycidyloxy groups; and groups such as alkyl, alkenyl, alkynyl, alkylaryl and arylalkyl groups comprising at least one group selected from primary, secondary or tertiary amino groups - the non-hydrolysable radical in this case being, for example, an aminoaryl or aminoalkyl group - amide, alkylcarbonyl, substituted or unsubstituted aniline, aldehyde, ketone, carboxyl, anhydride, hydroxyl, alkoxy, alkoxycarbonyl, mercapto, cyano, hydroxyphenyl, alkyl carboxylate, sulphonic acid, phosphoric acid, (meth)acryloyloxy groups, groups containing an epoxide ring such as glycidyl and glycidyloxy, allyl and vinyl groups.

15. Sol according to any one of Claims 11 to 14, wherein said separable and non-separable radicals are, in addition, optionally substituted by one or more substitutents selected generally from alkoxy groups and halogen atoms.

16. Sol according to any one of Claims 11 to 15, wherein the organosilane compound is of the formula (III) below:
Si (R₁') (R₁)₃, where the radicals R₁ are identical or different from one another, preferably identical, and represent a separable, removable - for example hydrolysable - group as defined in Claim 13, preferably a C₁ to C₄ alkoxy group, more preferably an ethoxy or methoxy group; and R₁' is a non-removable, non-separable - for example non-hydrolysable - radical as defined in Claim 14, preferably a glycidyl or glycidyloxy-C₁ to C₂₀, preferably C₁ to C₆, alkylene group, for example a γ-glycidyloxypropyl radical, a β-glycidyloxyethyl radical, a τ-glycidyloxybutyl radical, an ε-glycidyloxypentyl radical, an ω-glycidyloxyhexyl radical and a 2-(3,4-epoxycyclohexyl)ethyl radical; a group containing at least one primary, secondary or tertiary amino group selected preferably from the 3-aminopropyl, N-(2-aminoethyl)-3-aminopropyl and N-[N'-(2'-aminoethyl)-2-aminoethyl]-3-aminopropyl groups.

17. Sol according to any one of Claims 11 to 16, wherein the organosilane compound is selected from the following compounds:
- allyltrimethoxysilane,
- N-(2-aminoethyl)-3-aminopropyltrimethoxysilane,
- N-[N'-(2'-aminoethyl)-2-aminoethyl]-3-aminopropyltrimethoxysilane,
- 3-aminopropyltrimethoxysilane,
- 3-glycidyloxypropyltrimethoxysilane,
- 3-mercaptopropyltrimethoxysilane,
- 3-methacryloxypropylmethyldimethoxysilane,
- 3-methacryloxypropyltrimethoxysilane,
- N-phenylaminopropyltrimethoxysilane,
- vinyltrimethoxysilane.

18. Sol according to Claim 17, wherein the organosilane compound is 3-glycidyloxypropyltrimethoxysilane (GLYMO).

19. Sol according to any one of Claims 1 to 16, wherein the organosilane compound is selected from compounds whose hydrolysis reaction does not lead to the formation of methanol.

20. Sol according to Claim 19, wherein the organosilane compound is selected from the following compounds:
- 3-aminopropyltriethoxysilane,
- p-aminophenylsilane,
- 3-aminopropyltriethoxysilane,
- 3-glycidyloxypropyldiisopropylethoxysilane,
- 3-glycidyloxypropyltriethoxysilane,
- (3-glycidyloxypropyl)methyldiethoxysilane,
- 3-mercaptopropyltriethoxysilane,
- 3-methacryloxypropylmethyldiethoxysilane,
- vinylmethyldiethoxysilane,
- vinyltriethoxysilane.

21. Sol according to Claim 20, wherein the organosilane compound is 3-glycidyloxypropyltriethoxysilane (GLYEO).

22. Sol according to any one of the preceding claims, wherein component c) is an acid selected from organic acids, such as carboxylic acids, for example aliphatic monocarboxylic acids such as acetic acid, dicarboxylic and tricarboxylic acids such as citric acid, and mixtures thereof; and mineral, inorganic acids such as hydrochloric acid, nitric acid and mixtures thereof.

23. Sol according to any one of the preceding claims, wherein component c) is a base selected from amines such as ethanolamine, triethylamine and mixtures thereof.

24. Sol according to any one of the preceding claims, further comprising at least one surfactant selected from ionic surfactants such as sarcosinates and non-ionic surfactants such as ethoxylated fatty alcohols.

25. Sol according to any one of the preceding claims, further comprising at least one organic binder.

26. Sol according to any one of the preceding claims, further comprising a filler selected from micas and talcs.

27. Sol according to Claim 26, wherein the filler is present in a proportion of 1% to 20%, preferably of 3% to 10%, relative to the weight percentage formulation.

28. Sol according to any one of the preceding claims, further comprising a filler selected from kaolins.

29. Sol according to any one of the preceding claims, further comprising at least one additional compound selected from organometallic compounds and organosilane compounds other than the organometallic compounds a) and organosilane compounds b) .

30. Sol according to Claim 29, wherein said additional organometallic compound other than the compound or compounds a) is selected from organometallic compounds containing a metal other than zirconium, aluminium and titanium, such as cerium, yttrium, lanthanum, lead, tin, antimony, boron, vanadium, indium, niobium, bismuth and hafnium.

31. Sol according to Claim 30, wherein said additional organometallic compound other than the compound or compounds a) is selected from alkoxides/alcoholates of metals other than zirconium, and compounds such as yttrium acetate trihydrate, or other hydrates; yttrium nitrate; cerium acetate hydrate; cerium acetylacetonate hydrate; cerium stearate; lanthanum nitrate hexahydrate; lanthanum acetate hydrate; and lanthanum acetylacetonate.

32. Sol according to any one of Claims 29 to 31, wherein said additional organosilane compound is a compound of formula (IV) :
Si(R₁)₄ (IV),
where R₁ represents a removable, separable, hydrolysable radical as defined in Claim 16; preferably R₁ is an alkoxy group of 1 to 4 carbon atoms, such as methoxy, ethoxy, n-propoxy, isopropoxy, sec-butoxy, or tert-butoxy.

33. Sol according to any one of Claims 29 to 31, wherein said additional organosilane compound is a fluorosilane.

34. Sol according to Claim 33, wherein said fluorosilane is selected from the following compounds:
C₂F₅CH₂-CH₂-SiY₃
n-C₆F₁₃CH₂CH₂-SiY₃
n-C₈F₁₇CH₂CH₂-SiY₃
n-C₁₀F₂₁CH₂CH₂-SiY₃
(Y=OCH₃, OC₂H₅ or Cl)
i-C₃F₇O-(CH₂)₃-SiCl₂(CH₃)
n-C₆F₁₃CH₂CH₂SiCl₂(CH₃)
n-C₆F₁₃CH₂CH₂SiCl(CH₃)₂.

35. Sol according to any one of the preceding claims, further comprising one or more metal salts, for example one or more rare earth metal salts.

36. Sol according to any one of the preceding claims, further comprising at least one conductive material.

37. Sol according to any one of the preceding claims, further comprising a colorant selected from dyes, pigments and nacres.

38. Sol according to any one of the preceding claims, comprising in % by weight:
a)- 3% to 30%, preferably 5% to 20%, more preferably 7% to 15%, especially 8% to 14%, more especially 10% to 13%, for example 10.8% or 12%, of tetra-n-propoxyzirconium (TPOZ), aluminium or titanium;
b)- 5% to 50%, preferably 5% to 40%, more preferably 10% to 40%, especially 15% or 20% to 30%, for example 22% or 23%, of 3-glycidyloxypropyltrimethoxysilane (GLYMO);
c)- 1% to 15%, preferably 2% to 10%, more preferably 3% to 8%, for example 5%, of at least one compound selected from acids, bases, glycols and ethoxyethanol;
d)- the remainder to 100% of demineralized or distilled water;
the total weight amount of a) and b) being greater than 30%, preferably greater than 31.2%; 31.5%; 32%; or 33%, more preferably greater than 35%, especially greater than 40%, more especially greater than 50%.

39. Kit comprising:
- a first container containing a first part A, in liquid form, comprising components a), c) and d) of the sol as defined in any one of Claims 1 to 38;
- a second container containing a second part B, in liquid form, comprising component b) of the sol as defined in any one of Claims 1 to 38.

40. Kit according to Claim 39, wherein part A represents from 50% to 90% by weight, preferably from 60% to 90% by weight, and part B represents from 10% to 50% by weight, preferably from 10% to 40% by weight, of the sol to be prepared.

41. Process for preparing a sol-gel layer on a surface of a substrate, wherein:
- a sol according to any one of Claims 1 to 38 is deposited on the surface to give a sol layer on the surface of the substrate;
- said sol layer is dried to give a sol-gel layer on the surface of the substrate.

42. Process according to Claim 41, wherein, in a single operation, a sol-gel layer is deposited with a dry thickness of 500 nm to 20 µm, preferably of 1 or 2 to 10 µm, more preferably of 4 to 5 µm.

43. Process according to either of Claims 41 and 42, wherein the sol is heated beforehand and/or during deposition.

44. Process according to any one of Claims 41 to 43, wherein the sol is filtered prior to deposition.

45. Process according to any one of Claims 41 to 44, wherein the sol is deposited by spraying, sprinkling or dipping.

46. Process according to any one of Claims 41 and 45, wherein the substrate is made of a material selected from metals; metal alloys; organic or mineral, inorganic glasses; organic materials such as plastics; wood; ceramics; textiles; concretes; papers; stone; and composite materials comprising two or more of these materials; these materials being optionally plated and/or surface-treated and/or coated, for example painted.

47. Process according to Claim 46, wherein the substrate is made of a material selected from aluminium; titanium; copper; iron; and alloys thereof, such as steels, for instance stainless steels, and Inconel; and being optionally plated and/or surface-treated and/or coated, for example painted.

48. Process according to any one of Claims 46 and 47, wherein the surface treatment is selected from simple and chromate conversion layers, anodizing layers, or other layers.

49. Process according to any one of Claims 41 to 48, wherein, before the deposition of the sol, the surface is cleaned and/or activated and/or pickled by a chemical and/or physical and/or mechanical treatment.

50. Process according to any one of Claims 41 to 49, wherein the sol is prepared by mixing parts A and B as defined in Claim 39, or by mixing components a), b), c) and d).

51. Process according to Claim 50, wherein the sol is applied to the surface of the substrate within a time of 0 minute to 24 months, preferably of 0 minute to 12 months, more preferably of 0 minute to 6 months, especially of 30 minutes to 8 hours, after the mixing of parts A and B, or of components a), b), c) and d) .

52. Process according to any one of Claims 41 to 51, wherein the drying of the sol layer is carried out at a temperature of 0 to 500°C, preferably of 50 to 150°C, more preferably of 80 to 130°C for a time of 1 second to 2 hours, preferably of 5 minutes to 1 hour, more preferably of 10 to 30 minutes.

53. Process according to any one of Claims 41 to 52, wherein the drying of the sol layer is carried out using moveable thermal means such as pulsed-air thermal strippers (paint burners) or infrared radiant heating means.

54. Process according to any one of Claims 41 to 53, wherein the sol-gel layer deposited has a dry thickness of 0.5 to 20 µm, preferably of 1 or 2 to 10 µm.

55. Process according to any one of Claims 41 to 54, wherein said sol-gel layer is a layer selected from anti-scratch; anti-abrasion; antifriction; anti-fog; anti-static; anti-reflection; electroluminescent; photovariable; conducting (high and low K); superconducting; ferroelectric (piezoelectric and pyroelectric); barrier (to gases; to bases, to acids, to various chemical products, including strippers, hydraulic fluids such as "Skydrol"); soil-repellent; thermochromic; luminescent; non-linear optical; flame-retardant; sol-gel coating for composites; anti-adherent (adhesive resistant); insulating; anti-fouling; primer; paint; hydrophobic; hydrophilic; porous; biocidal; anti-odour; and anti-wear sol-gel layers, etc.

56. Sol-gel layer preparable by the process according to any one of Claims 41 to 55.

57. Substrate comprising at least one surface coated with at least one sol-gel layer according to Claim 56.

58. Use of the sol-gel layer according to Claim 56 for imparting corrosion resistance properties to a surface of a substrate, in particular to a surface made of a material selected from metals, metal alloys and composite materials comprising a metal or a metal alloy.

59. Use according to Claim 58, wherein said surface is coated only with said sol-gel layer.

60. Process for preparing a coating comprising two or more layers on a surface of a substrate, at least one of these layers being a sol-gel layer prepared by the process according to any one of Claims 41 to 55.

61. Process according to Claim 60 for preparing a coating comprising two or more layers on a surface of a substrate, wherein:
- a sol-gel layer is prepared on said surface; then
- one or more other layers is or are applied on said sol-gel layer, said other layers being selected, for example, from paint, primer, mastic, adhesive or resin layers.

62. Process according to Claim 61, wherein said layer or layers are applied on the sol-gel layer immediately after its preparation.

63. Process according to Claim 62, wherein said layer or layers are applied on the sol-gel layer within a time of one month to ten years after the preparation of the sol-gel layer.

64. Process according to any one of Claims 60 to 63, wherein the coating comprises two or more identical or different sol-gel layers and optionally one or more other layers.

65. Process according to Claim 64, wherein said sol-gel layers are selected from the sol-gel layers defined in Claim 55.

## Patentansprüche

1. Sol zur Sol-Gel-Beschichtung einer Oberfläche, wobei das Sol Folgendes in Gewichtsprozent umfasst:
a) 3 bis 30 %, vorzugsweise 5 bis 20 %, bevorzugter 7 bis 15 %, besser 8 bis 14 %, noch besser 10 bis 13 %, zum Beispiel 10,8 % oder 12 %wenigstens einer metallorganischen Zirkonium-, Aluminium- oder Titanverbindung;
b) 5 bis 50 %, vorzugsweise 5 bis 40 %, bevorzugter 10 bis 40 %, besser 15 oder 20 bis 30 %, zum Beispiel 22 % oder 23 %, wenigstens einer Organosilanverbindung;
c) 1 bis 15 %, vorzugsweise 2 bis 10 %, bevorzugter 3 bis 8 %, zum Beispiel 5 %, wenigstens einer aus Säuren, Basen, Glykolen und Ethoxyethanol ausgewählten Verbindung;
d) den Rest bis 100 % an entmineralisiertem oder destilliertem Wasser;
wobei die Gesamtmenge an a) und b) über 30 %, vorzugsweise über 31,2; 31,5; 32; oder 33 %, bevorzugter über 35 %, besser über 40 % und noch besser über 50 % beträgt.

2. Sol gemäß Anspruch 1, das weniger als 5 Gew.-%, vorzugsweise weniger als 3 Gew.-%, bevorzugter weniger als 1 Gew.-% nichttoxische oder nichtschädigende organische Lösungsmittel umfasst, die vorzugsweise aus Alkoholen wie etwa nichttoxischen oder nichtschädigenden aliphatischen C₁₋₁₀-Alkoholen ausgewählt sind.

3. Sol gemäß Anspruch 1, das einen Feststoffgehalt von mehr als 4 Gew.-%, vorzugsweise 4 bis 37 Gew.-%, bevorzugter 18 bis 37 %, besser 20 bis 30 % aufweist.

4. Sol gemäß einem der vorangehenden Ansprüche, bei dem das Verhältnis zwischen der Organosilanverbindung und der metallorganischen Verbindung 1,5 oder 1,6 bis 6, vorzugsweise 1,8 bis 2,5 beträgt.

5. Sol gemäß einem der vorangehenden Ansprüche, bei dem die metallorganische Verbindung der folgenden Formel (I) oder Formel (II) entspricht:
RₓM⁴⁺R'₄₋ₓ (I),
RₓAl³⁺R'₃₋ₓ (II),
worin M Zr oder Ti darstellt, R einen abtrennbaren, entfernbaren, zum Beispiel hydrolysierbaren Rest darstellt, R' einen nicht abtrennbaren, nicht entfernbaren, zum Beispiel nicht hydrolysierbaren Rest darstellt und x im Fall der Formel (I) 1 bis 4 oder im Fall der Formel (II) 1 bis 3 beträgt und falls mehrere Reste R und/oder R' in einer Verbindung der Formel (I) oder Formel (II) vorhanden sind, diese jeweils gleich oder verschieden sein können.

6. Sol gemäß Anspruch 5, bei dem der entfernbare, abtrennbare, zum Beispiel hydrolysierbare Rest oder Reste R im allgemeinen aus Halogenen wie etwa F, Cl, Br, I, insbesondere Cl und Br; Alkoxygruppen, vorzugsweise geraden oder verzweigten C₁-C₁₀-, bevorzugter C₁-C₅-, besser C₂-C₄-Alkoxygruppen wie etwa zum Beispiel Methoxy-, Ethoxy-, n-Propoxy-, Isopropoxy-, n-Butoxy-, Isobutoxy-, sec-Butoxy-, tert-Butoxy, n-Pentyloxy- und n-Hexyloxygruppen; Cycloalkyloxy-, vorzugsweise C₃-C₁₀-Cycloalkyloxygruppen wie etwa zum Beispiel einer Cyclopropyloxygruppe, Cyclohexyloxygruppe; Aryloxygruppen, vorzugsweise C₆-C₁₀-Aryloxygruppen wie etwa zum Beispiel einer Phenoxygruppe; Acyloxygruppen, vorzugsweise C₁-C₄-Acyloxygruppen wie etwa zum Beispiel Acetoxy- und Propionyloxygruppen; Alkylcarbonylgruppen, zum Beispiel einer Acetylgruppe; und (C₁-C₆)-Alkoxy-(C₂-C₃)-alkylgruppen (das heißt eine von einem C₁-C₆-Ethylenglykol oder Propylenglykol abgeleitete Gruppe) ausgewählt ist (sind); wobei die Gruppe oder Gruppen R gegebenenfalls außerdem einen oder mehrere aus Halogenen und Alkoxygruppen ausgewählte Substituenten umfassen können.

7. Sol gemäß einem der Ansprüche 5 und 6, bei dem der nicht entfernbare, abtrennbare, zum Beispiel nicht hydrolysierbare Rest oder Reste R' im allgemeinen aus Wasserstoff; einer Hydroxygruppe, Alkylgruppen, vorzugsweise geraden oder verzweigten C₁-C₁₀-, bevorzugter C₁-C₄-Alkylgruppen wie etwa zum Beispiel Methyl-, Ethyl-, Propyl-, n-Butyl-, Isobutyl-, sec-Butyl- und tert-Butylgruppen; Alkenylgruppen, vorzugsweise C₂-C₄-Alkenylgruppen wie etwa zum Beispiel Vinyl-, 1-Propenyl-, 2-Propenyl- und Butenylgruppen; Alkinylgruppen, vorzugsweise C₂-C₄-Alkinylgruppen wie etwa zum Beispiel Acetylenyl- und Propargylgruppen; C₆-C₁₀-Arylgruppen wie etwa Phenyl- und Naphthylgruppen; Methacryl- und Methacryloxypropylgruppen ausgewählt ist (sind) und die Gruppe oder die Gruppen R' gegebenenfalls außerdem einen oder mehrere, im allgemeinen aus Halogenen und Alkoxygruppen ausgewählte Substituenten umfassen können.

8. Sol gemäß einem der Ansprüche 5 bis 7, bei dem die metallorganische Verbindung der Formel MR₄ oder AIR₃ entspricht, worin M und R wie in Anspruch 5 definiert sind.

9. Sol gemäß Anspruch 8, bei dem die 4 oder 3 Reste R alle identisch sind und dieselbe Gruppe wie etwa eine Alkoxy-, Aryloxy- oder Cycloalkyloxygruppe bedeuten.

10. Sol gemäß Anspruch 9, bei dem die metallorganische Verbindung Tetra-n-propoxyzirkonium ("TPOZ") oder Tetraisopropoxyzirkonium ist.

11. Sol gemäß einem der vorangehenden Ansprüche, bei dem die Organosilanverbindung eine Verbindung ist, die wenigstens einen nicht entfernbaren, nicht abtrennbaren, vorzugsweise nicht hydrolysierbaren Rest und wenigstens einen entfernbaren, abtrennbaren, vorzugsweise hydrolysierbaren, an das Silizium gebundenen Rest aufweist.

12. Verbindung gemäß Anspruch 11, bei dem die Organosilanverbindung 2 oder 3, insbesondere 3 entfernbare, abtrennbare, zum Beispiel hydrolysierbare Reste und einen oder zwei, insbesondere einen nicht abtrennbaren, nicht entfernbaren, zum Beispiel nicht hydrolysierbaren Rest umfasst.

13. Sol gemäß einem der Ansprüche 11 und 12, bei dem der entfernbare, abtrennbare, zum Beispiel hydrolysierbare Rest oder die Reste R im allgemeinen aus Halogenen wie etwa F, Cl, Br, I, insbesondere Cl und Br; Alkoxygruppen, vorzugsweise geraden oder verzweigten C₁-C₁₀-, bevorzugter C₁-C₅-, besser C₂-C₄-Alkoxygruppen wie etwa Methoxy-, Ethoxy-, n-Propoxy-, Isopropoxy-, n-Butoxy-, Isobutoxy-, sec-Butoxy-, tert-Butoxy, n-Pentyloxy- und n-Hexyloxygruppen; Cycloalkyloxygruppen, vorzugsweise C₃-C₁₀-Cycloalkyloxygruppen wie etwa zum Beispiel einer Cyclopropyloxygruppe, einer Cyclohexyloxygruppe; Aryloxygruppen, vorzugsweise C₆-C₁₀-Aryloxygruppen wie etwa zum Beispiel einer Phenoxygruppe; Acyloxygruppen, vorzugsweise C₁-C₄-Acyloxygruppen wie etwa zum Beispiel einer Acetoxy-und Propionyloxygruppen; und Alkylcarbonylresten wie etwa einem Acetylrest ausgewählt ist (sind).

14. Sol gemäß einem der Ansprüche 11 und 12, bei dem der nicht abtrennbare, nicht entfernbare, zum Beispiel nicht hydrolysierbare Rest oder Reste aus Wasserstoff; einer Hydroxygruppe; einer Mercaptogruppe: einer Cyangruppe; Alkylgruppen, vorzugsweise geraden oder verzweigten C₁-C₁₀-, bevorzugter C₁-C₄-Alkylgruppen wie etwa Methyl-, Ethyl-, Propyl-, n-Butyl-, Isobutyl-, sec-Butyl- und tert-Butylgruppen; Alkenylgruppen, vorzugsweise C₂-C₄-Alkenylgruppen wie etwa Vinyl-, 1-Propenyl-, 2-Propenyl- und Butenylgruppen; Alkinylgruppen, vorzugsweise C₂-C₄-Alkinylgruppen wie etwa Acetylenyl- und Propargylgruppen; Arylgruppen, vorzugsweise C₆-C₁₀-Arylgruppen wie etwa Phenyl- und Naphthylgruppen; Alkylarylgruppen; Arylalkylgruppen; (Meth)Acryl- und (Meth)Acryloxypropylgruppen; Glycidyl-und Glycidyloxygruppen; und Gruppen wie etwa Alkyl-, Alkenyl-, Alkinyl-, Alkylaryl- und Arylalkylgruppen, die wenigstens eine aus einer primären, sekundären oder tertiären Amino-, - wobei der nicht hydrolysierbare Rest dann zum Beispiel eine Aminoaryl- oder Aminoalkylgruppe ist -, Amid-, Alkylcarbonyl- substituierten oder unsubstituierten Anilino-, Aldehyd-, Keton-, Carboxy-, Anhydrid-, Hydroxy-, Alkoxy-, Alkoxycarbonyl-, Mercapto-, Cyan-, Hydroxyphenyl-, Alkylcarboxylat-, Sulfonsäure-, Phosphorsäure-, Meth(Acryloxyloxy)-gruppe, einen Epoxidring umfassenden Gruppen wie etwa Glycidyl und Glycidyloxy, einer Allyl- und Vinylgruppe ausgewählte Gruppe umfassen, ausgewählt ist (sind).

15. Sol gemäß einem der Ansprüche 11 bis 14, bei dem die abtrennbaren und nicht abtrennbaren Reste außerdem gegebenenfalls durch einen oder mehrere, im allgemeinen aus Alkoxygruppen und Halogenatomen ausgewählte Substituenten substituiert sind.

16. Sol gemäß einem der Ansprüche 11 bis 15, bei dem die Organosilanverbindung der folgenden Formel (III) entspricht:
SI(R₁')(R₁)₃
worin die Reste R gleich oder von einander verschieden, vorzugsweise gleich sind und eine abtrennbare, entfernbare, zum Beispiel hydrolysierbare, wie in Anspruch 13 definierte Gruppe, vorzugsweise C₁-C₄-Alkoxygruppe, bevorzugter eine Ethoxy- oder Methoxygruppe darstellen und R₁' ein nicht entfernbarer, nicht abtrennbarer, zum Beispiel nicht hydrolysierbarer, wie in Anspruch 14 definierter Rest, vorzugsweise eine Glycidyl- oder Glycidyloxy-C₁-C₂₀-, vorzugsweise -C₁-C₆-alkylengruppe, zu Beispiel ein γ-Glycidyloxypropylrest, ein β-Glycidyloxyethylrest, ein τ-Glycidyloxybutylrest, ein ε-Glycidyloxypentylrest, ein ω-Glycidyloxyhexylrest und ein 2-(3,4-Epoxycyclohexyl)ethylrest oder eine Gruppe ist, die wenigstens eine primäre, sekundäre oder tertiäre Aminogruppe umfasst, die vorzugsweise aus einer 3-Aminopropyl-, N-(2-Aminoethyl)-3-aminopropyl- und N-[N'-(2'-Aminoethyl)-2-aminoethyl]-3-aminopropylgruppe ausgewählt ist.

17. Sol gemäß einem der Ansprüche 11 bis 16, bei dem die Organosilanverbindung aus den folgenden Verbindungen ausgewählt ist:
- Allyltrimethoxysilan,
- N-(2-Aminoethyl)-3-aminopropyltrimethoxysilan,
- N-[N'-(2'-Aminoethyl)-2-aminoethyl]-3-aminopropyltrimethoxysilan,
- 3-Aminopropyltrimethoxysilan,
- 3-Glycidoxypropyltrimethoxysilan,
- 3-Mercaptopropyltrimethoxysilan,
- 3-Methacryloxypropylmethyldimethoxysilan,
- 3-Methacryloxypropyltrimethoxysilan,
- N-Phenylaminopropyltrimethoxysilan,
- Vinyltrimethoxysilan.

18. Sol gemäß Anspruch 17, bei dem die Organosilanverbindung 3-Glycidoxypropyltrimethoxysilan (GLYMO) ist.

19. Sol gemäß einem der Ansprüche 1 bis 16, bei dem die Organosilanverbindung aus den Verbindungen ausgewählt ist, deren Hydrolysereaktion nicht zur Bildung von Methanol führt.

20. Sol gemäß Anspruch 19, bei dem die Organosilanverbindung aus den folgenden Verbindungen ausgewählt ist:
- 3-Aminopropyltriethoxysilan,
- p-Aminophenylsilan,
- 3-Aminopropyltriethoxysilan,
- 3-Glycidoxypropyldiisopropylethoxysilan,
- 3-Glycidoxypropyltriethoxysilan,
- (3-Glycidoxypropyl)methyldiethoxysilan,
- 3-Mercaptopropyltriethoxysilan,
- 3-Methacryloxypropylmethyldiethoxysilan,
- Vinylmethyldiethoxysilan,
- Vinyltriethoxysilan.

21. Sol gemäß Anspruch 20, bei dem die Organosilanverbindung 3-Glycidoxypropyltriethoxysilan (GLYEO) ist.

22. Sol gemäß einem der vorangehenden Ansprüche, bei dem der Bestandteil c) eine Säure ist, die aus organischen Säuren wie etwa Carbonsäuren, zum Beispiel aliphatischen Monocarbonsäuren wie Essigsäure, Dicarbon- und Tricarbonsäuren wie Citronensäure, und ihren Gemischen und Mineralsäuren wie etwa Salzsäure, Salpetersäure und ihren Gemischen ausgewählt ist.

23. Sol gemäß einem der vorangehenden Ansprüche, bei dem der Bestandteil c) eine Base ist, die aus Aminen wie etwa Ethanolamin, Triethylamin und ihren Gemischen ausgewählt ist.

24. Sol gemäß einem der vorangehenden Ansprüche, das außerdem wenigstens ein Tensid umfasst, das aus ionischen Tensiden wie etwa Sarkosinaten und nichtionischen Tensiden wie etwa ethoxylierten Fettalkoholen ausgewählt ist.

25. Sol gemäß einem der vorangehenden Ansprüche, das außerdem wenigstens ein organisches Bindemittel umfasst.

26. Sol gemäß einem der vorangehenden Ansprüche, das außerdem einen aus Glimmern und Talken ausgewählten Füllstoff umfasst.

27. Sol gemäß Anspruch 26, bei dem der Füllstoff in einem Anteil von 1 bis 20 %, vorzugsweise 3 bis 10 % bezogen auf die Formulierung in Gewichtsprozent vorliegt.

28. Sol gemäß einem der vorangehenden Ansprüche, das außerdem einen aus Kaolinen ausgewählten Füllstoff umfasst.

29. Sol gemäß einem der vorangehenden Ansprüche, das außerdem wenigstens eine zusätzliche Verbindung umfasst, die aus den metallorganischen Verbindungen und den Organosilanen ausgewählt ist, die von den metallorganischen Verbindungen a) und Organosilanen b) verschieden sind.

30. Sol gemäß Anspruch 29, bei dem die von der oder den Verbindungen a) verschiedene, zusätzliche metallorganische Verbindung aus den metallorganischen Verbindungen ausgewählt ist, die ein anderes Metall als Zirkonium, Aluminium und Titan wie etwa Cerium, Yttrium, Lanthan, Blei, Zinn, Antimon, Bor, Vanadium, Indium, Niobium, Wismut und Hafnium umfassen.

31. Sol gemäß Anspruch 30, bei dem die von der oder den Verbindungen a) verschiedene, zusätzliche metallorganische Verbindung aus Alkoxid/Alkoholaten anderer Metalle als Zirkonium und Verbindungen wie etwa Yttriumacetattrihydrat oder anderen Hydraten, Yttriumnitrat, Ceriumacetathydrat, Ceriumacetylacetonathydrat, Ceriumstearat, Lanthannitrathexahydrat, Lanthanacetathydrat und Lanthanacetylacetonat ausgewählt ist.

32. Sol gemäß einem der Ansprüche 29 bis 31, bei dem die zusätzliche Organosilanverbindung eine Verbindung der Formel (IV) ist:
Si(Rᵢ)₄ (IV)
worin R₁ einen wie in Anspruch 16 definierten, entfernbaren, abtrennbaren, hydrolysierbaren Rest darstellt und R₁ vorzugsweise eine Alkoxygruppe mit 1 bis 4 Kohlenstoffatomen wie etwa Methoxy, Ethoxy, n-Propoxy, Isopropoxy, sec-Butoxy oder tert-Butoxy ist.

33. Sol gemäß einem der Ansprüche 29 bis 31, bei dem die zusätzliche Organosilanverbindung ein fluoriertes Silan ist.

34. Sol gemäß Anspruch 33, bei dem das fluorierte Silan aus den folgenden Verbindungen ausgewählt ist:
C₂F₅CH₂-CH₂-SiY₃
n-C₆F₁₃CH₂CH₂-SiY₃
n-C₈F₁₇CH₂CH₂-SiY₃
n-C₁₀F₂₁CH₂CH₂-SiY₃
(Y = OCH₃, OC₂H₅ oder Cl*)
i-C₃F₇O-(CH₂)₃-SiCl₂(CH₃)
n-C₆F₁₃CH₂CH₂SiCl₂(CH₃)
n-C₆F₁₃CH₂CH₂SiCI(CH₃)₂.

35. Sol gemäß einem der vorangehenden Ansprüche, das außerdem ein oder mehrere Metallsalze, zum Beispiel ein oder mehrere Seltenerdmetallsalze umfasst.

36. Sol gemäß einem der vorangehenden Ansprüche, das außerdem wenigstens ein leitfähiges Material umfasst.

37. Sol gemäß einem der vorangehenden Ansprüche, das außerdem ein aus Farbstoffen, Pigmenten und Perlglanzpigmenten ausgewähltes Farbmittel umfasst.

38. Sol gemäß einem der vorangehenden Ansprüche, das Folgendes in Gew.-% umfasst:
a) 3 bis 30 %, vorzugsweise 5 bis 20 %, bevorzugter 7 bis 15 %, besser 8 bis 14 %, noch besser 10 bis 13 %, zum Beispiel 10,8 % oder 12 % Tetra-n-propoxyzirkonium (TPOZ), -aluminium oder -titan;
b) 5 bis 50 %, vorzugsweise 5 bis 40 %, bevorzugter 10 bis 40 %, besser 15 oder 20 bis 30 %, zum Beispiel 22 % oder 23 % 3-Glycidoxypropyltrimethoxysilan (GLYMO);
c) 1 bis 15 %, vorzugsweise 2 bis 10 %, bevorzugt 3 bis 8 %, zum Beispiel 5 % mindestens einer aus Säuren, Basen, Glykolen und Ethoxyethanol ausgewählten Verbindung;
d) den Rest bis 100 % an entmineralisiertem oder destilliertem Wasser;
wobei die Gesamtmenge an a) und b) über 30 %, vorzugsweise über 31,2 %, 31,5 %, 32 % oder 33 %, bevorzugter über 35 %, besser über 40 % und noch besser über 50 % beträgt.

39. Kit umfassend:
- einen ersten Behälter, der einen ersten Teil A in flüssiger Form enthält, der die Bestandteile a), c) und d) des in einem der Ansprüche 1 bis 38 definierten Sols umfasst, und
- einen zweiten Behälter, der einen zweiten Teil B in flüssiger Form enthält, der den Bestandteil b) des in einem der Ansprüche 1 bis 38 definierten Sols umfasst.

40. Kit gemäß Anspruch 39, bei dem der Teil A 50 bis 90 Gew.-%, vorzugsweise 60 bis 90 Gew.-% ausmacht und der Teil B 10 bis 50 Gew.-%, vorzugsweise 10 bis 40 Gew.-% des herzustellenden Sols ausmacht.

41. Verfahren zur Herstellung einer Sol-Gel-Schicht auf einer Substratoberfläche, bei dem:
- auf die Oberfläche ein Sol gemäß einem der Ansprüche 1 bis 38 aufgebracht wird, wodurch eine Solschicht auf der Substratoberfläche erhalten wird, und
- diese Solschicht getrocknet wird, wodurch auf der Substratoberfläche eine Sol-Gel-Schicht erhalten wird.

42. Verfahren gemäß Anspruch 41, bei dem in einem einzigen Arbeitsgang eine Sol-Gel-Schicht mit einer Trockendicke von 500 nm bis 20 µm, vorzugsweise 1 oder 2 bis 10 µm, bevorzugter 4 bis 5 µm aufgebracht wird.

43. Verfahren gemäß einem der Ansprüche 41 und 42, bei dem das Sol vor und/oder während des Auftrags erhitzt wird.

44. Verfahren gemäß einem der Ansprüche 41 bis 43, bei dem das Sol vor dem Auftrag filtriert wird.

45. Verfahren gemäß einem der Ansprüche 41 bis 44, bei dem das Sol durch Spritzen, Besprengen oder Tauchen aufgetragen wird.

46. Verfahren gemäß einem der Ansprüche 41 bis 45, bei dem das Substrat aus einem Material besteht, das aus Metallen; Metalllegierungen; organischen oder mineralischen Gläsern; organischen Materialien wie etwa Kunststoffen; Holz; Keramik; Textilien; Beton; Papier; Stein; und mehrere dieser Materialien umfassenden Verbundmaterialien; ausgewählt ist, wobei diese Materialien gegebenenfalls plattiert sind und/oder einer Oberflächenbehandlung unterzogen wurden und/oder mit zum Beispiel Lacken beschichtet sind.

47. Verfahren gemäß Anspruch 46, bei dem das Substrat aus einem Material besteht, das aus Aluminium, Titan, Kupfer, Eisen und deren Legierungen wie Stahl wie etwa Edelstahl und Inconel ausgewählt ist, die gegebenenfalls plattiert sind und/oder einer Oberflächenbehandlung unterzogen wurden und/oder mit zum Beispiel Lacken beschichtet sind.

48. Verfahren gemäß einem der Ansprüche 46 und 47, bei dem die Oberflächenbehandlung aus einfachen und chromatierten Konversionsschichten, Anodisierungsschichten oder anderen ausgewählt ist.

49. Verfahren gemäß einem der Ansprüche 41 bis 48, bei dem vor dem Auftrag des Sols die Oberfläche gesäubert und/oder aktiviert und/oder durch eine chemische und/oder physikalische und/oder mechanische Behandlung abgetragen wird.

50. Verfahren gemäß einem der Ansprüche 41 bis 49, bei dem das Sol durch Mischen der in Anspruch 39 definierten Teile A und B oder durch Mischen der Bestandteile a), b), c) und d) hergestellt wird.

51. Verfahren gemäß Anspruch 50, bei dem das Sol mit einer Verzögerung von 0 Minuten bis 24 Monaten, vorzugsweise 0 Minuten bis 12 Monaten, bevorzugter 0 Minuten bis 6 Monaten, besser 30 Minuten bis 8 Stunden nach dem Mischen der Teile A und B oder der Bestandteile a), b), c) und d) auf die Substratoberfläche aufgebracht wird.

52. Verfahren gemäß einem der Ansprüche 41 bis 51, bei dem das Trocknen der Solschicht bei einer Temperatur von 0 bis 500 °C, vorzugsweise 50 bis 150 °C, bevorzugter 80 bis 130 °C während einer Dauer von 1 Sekunde bis 2 Stunden, vorzugsweise 5 Minuten bis 1 Stunde, vorzugsweise 10 bis 30 Minuten durchgeführt wird.

53. Verfahren gemäß einem der Ansprüche 41 bis 52, bei dem das Trocknen der Solschicht mit Hilfe mobiler thermischer Mittel wie etwa Umluftwärmetrocknern oder Infrarotstrahlungserhitzern durchgeführt wird.

54. Verfahren gemäß einem der Ansprüche 41 bis 53, bei dem die aufgebrachte Sol-Gel-Schicht eine Trockendicke von 0,5 bis 20 µm, vorzugsweise 1 oder 2 bis 10 µm aufweist.

55. Verfahren gemäß einem der Ansprüche 41 bis 54, bei dem die Sol-Gel-Schicht eine Schicht ist, die aus kratzfesten Sol-Gel-, abriebsbeständigen Sol-Gel-, scheuerfesten Sol-Gel-, beschlagsfreien Sol-Gel-, antistatischen Sol-Gel-, blendfreien Sol-Gel-, lichtemittierenden Sol-Gel-, photovariablen Sol-Gel-, leitenden (hohes und niedriges K) Sol-Gel-, supraleitenden Sol-Gel-, ferroelektrischen (piezo und pyro) Sol-Gel-, dämmenden (gegenüber Gasen, gegenüber Basen, gegenüber Säuren, gegenüber verschiedenen chemischen Produkten, darunter Abbeizmittel und Hydraulikflüssigkeiten wie etwa "Skydrol") Sol-Gel-, schmutzabweisenden Sol-Gel-, thermochromen Sol-Gel-, lumineszierenden Sol-Gel-, nicht-linearoptischen Sol-Gel-, flammwidrigen Sol-Gel-Schichten, Sol-Gel-Schichten für Verbundwerkstoffe, nichthaftenden Sol-Gel-, isolierenden Sol-Gel-, fäulnisverhindernden Sol-Gel-, Grundier-Sol-Gel-, Lack-Sol-Gel-, hydrophoben Sol-Gel-, hydrophilen Sol-Gel-, porösen Sol-Gel-, bioziden Sol-Gel-, desodorierenden Sol-Gel-, verschleißfesten Sol-Gel-Schichten usw. ausgewählt ist.

56. Sol-Gel-Schicht, die durch das Verfahren gemäß einem der Ansprüche 41 bis 55 hergestellt werden kann.

57. Substrat umfassend wenigstens eine Oberfläche, die mit wenigstens einer Sol-Gel-Schicht gemäß Anspruch 56 überzogen ist.

58. Verwendung der Sol-Gel-Schicht gemäß Anspruch 56, um eine Substratoberfläche, insbesondere eine Oberfläche aus einem Material, das aus Metallen, Metalllegierungen und ein Metall und eine Metalllegierung umfassenden Verbundwerkstoffen ausgewählt ist, mit Korrosionsbeständigkeitseigenschaften auszustatten.

59. Verwendung gemäß Anspruch 58, bei der die Oberfläche nur mit der Sol-Gel-Schicht überzogen wird.

60. Verfahren zur Herstellung eines mehrere Schichten auf einer Substratoberfläche umfassenden Überzugs, wobei wenigstens eine dieser Schichten eine durch das Verfahren gemäß einem der Ansprüche 41 bis 55 hergestellte Sol-Gel-Schicht ist.

61. Verfahren gemäß Anspruch 60 zur Herstellung eines mehrere Schichten auf einer Substratoberfläche umfassenden Überzugs, bei dem
- auf dieser Oberfläche eine Sol-Gel-Schicht hergestellt wird, und dann
- auf dieser Sol-Gel-Schicht eine oder mehrere Schichten aufgetragen werden, die zum Beispiel aus Lack-, Grundier-, Kitt-, Klebstoff- oder Harzschichten ausgewählt sind.

62. Verfahren gemäß Anspruch 61, bei dem die Schicht oder Schichten unmittelbar nach der Herstellung der Sol-Gel-Schicht auf diese aufgebracht werden.

63. Verfahren gemäß Anspruch 62, bei dem die Schicht oder Schichten mit einer Verzögerung von einem Monat bis 10 Jahren nach der Herstellung der Sol-Gel-Schicht auf die Sol-Gel-Schicht aufgebracht werden.

64. Verfahren gemäß einem der Ansprüche 60 bis 63, bei dem der Überzug mehrere gleiche oder verschiedene Sol-Gel-Schichten und gegebenenfalls eine oder mehrere andere Schichten umfasst.

65. Verfahren gemäß Anspruch 64, bei dem die Sol-Gel-Schichten aus den in Anspruch 55 definierten Sol-Gel-Schichten ausgewählt sind.
